(19) **Europäisches Patentamt** / **European Patent Office** / **Office européen des brevets**

(11) **EP 4 136 887 B1**

(12) # EUROPEAN PATENT SPECIFICATION

(45) Date of publication and mention of the grant of the patent:
**20.05.2026 Bulletin 2026/21**

(21) Application number: **21724425.0**

(22) Date of filing: **15.04.2021**

(51) International Patent Classification (IPC):
*H04W 48/12* (2009.01)     *H04L 5/00* (2006.01)
*H04W 56/00* (2009.01)     *H04W 28/20* (2009.01)

(52) Cooperative Patent Classification (CPC):
**H04W 48/12; H04L 5/0005; H04L 5/0037; H04L 5/0053; H04W 56/001;** H04W 28/20

(86) International application number:
**PCT/US2021/027533**

(87) International publication number:
**WO 2021/211879 (21.10.2021 Gazette 2021/42)**

(54) **SELECTION OF INITIAL ACQUISITION PARAMETERS FOR REDUCED-CAPABILITY DEVICES**

AUSWAHL VON ANFANGSAQUISITIONSPARAMETERN FÜR VORRICHTUNGEN MIT REDUZIERTER KAPAZITÄT

SÉLECTION DE PARAMÈTRES D'ACQUISITION INITIAUX POUR DISPOSITIFS À CAPACITÉ RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2020 US 202063010640 P**
**14.04.2021 US 202117230923**

(43) Date of publication of application:
**22.02.2023 Bulletin 2023/08**

(73) Proprietor: **QUALCOMM INCORPORATED**
San Diego, California 92121-1714 (US)

(72) Inventors:
• **ANG, Peter Pui Lok**
  San Diego, California 92121 (US)
• **KWON, Hwan Joon**
  San Diego, California 92121 (US)
• **LEI, Jing**
  San Diego, California 92121 (US)
• **GAAL, Peter**
  San Diego, California 92121 (US)
• **LY, Hung Dinh**
  San Diego, California 92121 (US)

(74) Representative: **Bardehle Pagenberg Partnerschaft mbB Patentanwälte Rechtsanwälte Prinzregentenplatz 7 81675 München (DE)**

(56) References cited:
**WO-A1-2018/203672**

• **ERICSSON: "Summary of email discussion on NR-Light", vol. TSG RAN, no. Newport Beach, US; 20190916 - 20190919, 9 September 2019 (2019-09-09), XP051782678, Retrieved from the Internet <URL:http://www.3gpp.org/ftp/tsg_ran/ TSG_RAN/TSGR_85/Docs/RP-192160.zip> [retrieved on 20190909]**
• **ERICSSON: "New SID on support of reduced capability NR devices", vol. TSG RAN, no. Sitges, Spain; 20191209 - 20191212, 12 December 2019 (2019-12-12), XP051840369, Retrieved from the Internet <URL:https://ftp.3gpp.org/tsg_ran/ TSG_RAN/TSGR_86/Docs/RP-193238.zip> [retrieved on 20191212]**

- **VIVO ET AL: "Framework and Principles for Reduced Capability NR devices", vol. RAN WG1, no. e-Meeting; 20200817 - 20200828, 8 August 2020 (2020-08-08), XP051917411, Retrieved from the Internet <URL:https://ftp.3gpp.org/tsg_ran/WG1_RL1/TSGR1_102-e/Docs/R1-2005386.zip> [retrieved on 20200808]**
- **CMCC: "Discussion on framework of reduced capability NR devices", vol. RAN WG1, no. e-Meeting; 20200525 - 20200605, 16 May 2020 (2020-05-16), XP051885732, Retrieved from the Internet <URL:https://ftp.3gpp.org/tsg_ran/WG1_RL1/TSGR1_101-e/Docs/R1-2003969.zip> [retrieved on 20200516]**
- **LENOVO ET AL: "On UE complexity reduction features for RedCap", vol. RAN WG1, no. E-meeting; 20200817 - 20200828, 7 August 2020 (2020-08-07), XP051915055, Retrieved from the Internet <URL:https://ftp.3gpp.org/tsg_ran/WG1_RL1/TSGR1_102-e/Docs/R1-2005830.zip> [retrieved on 20200807]**

Description

## TECHNICAL FIELD

The technology discussed below relates generally to wireless communication systems, and more particularly, to initial acquisition of a wireless connection. Some aspects may include providing and enabling techniques for selecting, configuring, or communicating for various types of communication devices (e.g., initial acquisition for reduced-capability devices). Techniques enable and provide new communication devices and methods that are compatible with an expanded set of use case categories, including UEs for which peak capabilities are not necessary yet with improved efficiency and system operations.

## INTRODUCTION

In a wireless communication system configured according to 3GPP specifications for 5G New Radio (NR), a mobile device may perform an initial acquisition of a connection with a base station. One approach includes searching for a synchronization signal (SS) and a physical broadcast channel (PBCH) carrying basic system information of the network. A mobile device receiving an SS and system information may then seek to receive a control resource set that provides information that it may utilize for receiving further system information about the network.

In some scenarios, future NR specifications may address use cases for reduced-capability mobile devices. For example, low-end smartphones, wireless sensors (e.g., pressure, humidity, temperature, motion, acceleration sensors), actuators, data collection and processing devices, video surveillance devices, and wearable devices may have a small form factor and/or may require a several-year battery life. And in one particular example, a wearable device like a smart watch may operate as a companion device to a smartphone, thus reducing the watch's independent operational requirements. In such use cases, peak capabilities of devices may not be required and sufficient 5G connectivity may be provided with low-end services. With these reduced-capability devices, improved efficiency and/or cost-effectiveness may be achieved at the potential cost of having reduced capabilities, such as a relatively narrow bandwidth, a reduced number of antennas, relaxed processing time requirements, extended idle times, or other diminished or constrained functions or capabilities.

WO 2018/203672 A1 provides a communication method and system for converging a fifth generation (5G) communication system for supporting higher data rates beyond a fourth generation (4G) system with a technology for internet of things (IoT). The communication method and system may be applied to intelligent services based on the 5G communication technology and the IoT-related technology, such as smart home, smart building, smart city, smart car, connected car, health care, digital education, smart retail, security and safety services. A method of a terminal for receiving data in a cellular network is provided. The method comprises receiving a synchronization signal block (SS block) including at least one synchronization signal and a broadcast channel from a base station, identifying an offset between the SS block and a resource block (RB) grid from system information in the broadcast channel, and determining the resource block grid based on the offset.

The 3GPP TSG RAN Meeting #85 draft RP-192160, Newport Beach, US, September 16th - 19th, 2019, provides a summary of email discussion on "NR-Light".

As the demand for mobile broadband access continues to increase, research and development continue to advance wireless communication technologies not only to meet the growing demand for mobile broadband access, but to advance and enhance the user experience with mobile communications.

## BRIEF SUMMARY OF SOME EXAMPLES

The scope of protection of the present invention is defined in the independent claims. Optional variants are defined in the dependent claims.

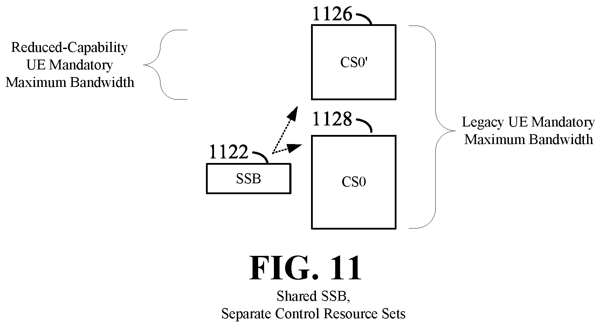

In the following the invention is best understood in view of figures 11-18 and the associated passages. The remaining embodiments, aspects and examples disclosed below are included for illustrative purpose and for facilitating the understanding of the invention.

The following presents a simplified summary of one or more aspects of the present disclosure, to provide a basic understanding of such aspects. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in a simplified form as a prelude to the more detailed description that is presented later.

In various aspects, this disclosure relates to various apparatus, methods, computer programs and computer-readable media for providing or utilizing initial acquisition parameters for reduced-capability wireless user equipment (UEs).

In an example a method of wireless communication is disclosed. The method includes transmitting an SSB that includes information for identification of a first CORESET for a first set of one or more UEs and information for identification of a second CORESET for a second set of one or more UEs. The method further includes transmitting the first CORESET over a first bandwidth for the first set of one or more UEs and transmitting the second CORESET over a second bandwidth, wider than the first bandwidth, for the second set of one or more UEs.

In another example, a method of wireless communication is disclosed. The method includes transmitting an SSB for identification of a first system information block (SIB) for a first set of one or more UEs within a shared CORESET, and information for identification of a second SIB for a second set of one or more UEs within the shared CORESET. The method further includes transmitting the CORESET including the first SIB having a first bandwidth, and including the second SIB having a second bandwidth, wider than the first bandwidth.

In yet another example, a method of wireless communication is disclosed, as defined in claim 9.

In yet another example, a method of wireless communication is disclosed, as defined in claim 10.

In still another example, an apparatus for wireless communication is disclosed, as defined in claim 13.

In still another example, a computer program is disclosed, as defined in claim 14.

In still another example, a computer-readable medium is disclosed, as defined in claim 15.

These and other aspects of the technology discussed herein will become more fully understood upon a review of the detailed description, which follows. Other aspects, features, and embodiments will become apparent to those of ordinary skill in the art, upon reviewing the following description of specific, exemplary embodiments in conjunction with the accompanying figures. While the following description may discuss various advantages and features relative to certain embodiments and figures, all embodiments can include one or more of the advantageous features discussed herein. In other words, while this description may discuss one or more embodiments as having certain advantageous features, one or more of such features may also be used in accordance with the various embodiments discussed herein. In similar fashion, while this description may discuss exemplary embodiments as device, system, or method embodiments it should be understood that such exemplary embodiments can be implemented in various devices, systems, and methods.

## BRIEF DESCRIPTION OF THE DRAWINGS

FIG. 1 is a schematic illustration of a wireless communication system according to some aspects of this disclosure.

FIG. 2 is a schematic illustration of an example of a radio access network according to some aspects of this disclosure.

FIG. 3 is a conceptual illustration of an organization of wireless resources in an air interface utilizing orthogonal frequency divisional multiplexing (OFDM) according to some aspects of this disclosure.

FIG. 4 is a conceptual illustration of an OFDM air interface utilizing a scalable numerology according to some aspects of this disclosure.

FIG. 5 is a block diagram illustrating an example of a hardware implementation for a scheduling entity (e.g., a base station) according to some aspects of this disclosure.

FIG. 6 is a block diagram illustrating an example of a hardware implementation for a scheduled entity (e.g., a UE) according to some aspects of this disclosure.

FIG. 7 is a flow chart illustrating a portion of an exemplary UE process for initial acquisition of a network connection according to some aspects of this disclosure.

FIG. 8 is a conceptual illustration of a base station transmission of separate SSBs and separate control resource sets for different UE categories or sets according to further aspects of this disclosure.

FIG. 9 is a conceptual illustration of a base station transmission of separate SSBs and separate control resource sets for different UE categories or sets according to still further aspects of this disclosure.

FIG. 10 is a flow chart illustrating an exemplary process for initial acquisition of a network connection between a scheduling entity and two UE categories or sets according to some aspects of this disclosure.

FIG. 11 is a conceptual illustration of a scheduling entity transmission of a shared SSB and separate control resource sets according to some aspects of this disclosure.

FIG. 12 is a flow chart illustrating an exemplary process for initial acquisition of a network connection between a scheduling entity and two UE categories or sets according to some aspects of this disclosure.

FIG. 13 is a conceptual illustration of a scheduling entity transmission of a shared SSB and a shared control resource set with separate system information blocks for different UE categories or sets according to some aspects of this disclosure.

FIG. 14 is a flow chart illustrating an exemplary process for initial acquisition of a network connection between a scheduling entity and two UE categories or sets according to some aspects of this disclosure.

FIG. 15 is a conceptual illustration of a scheduling entity transmission of a shared SSB and a shared control resource set for a plurality of UE categories or sets according to some aspects of this disclosure.

FIG. 16 is a flow chart illustrating an exemplary process for initial acquisition of a network connection between a scheduling entity and two UE categories or sets according to some aspects of this disclosure.

FIG. 17 is a conceptual illustration of a base station transmission of separate SSBs and separate control resource sets for different UE categories or sets that apply different control element interpretation or translation rules according to further aspects of this disclosure.

FIG. 18 is a flow chart illustrating an exemplary process for initial acquisition of a network connection between a scheduling entity and two UE categories or sets according to some aspects of this disclosure.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, those skilled in the art will readily recognize that these concepts may be practiced without these specific details. In some instances, this description provides well known structures and components in block diagram form in order to avoid obscuring such concepts.

While this description describes aspects and embodiments by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, embodiments and/or uses may come about via integrated chip embodiments and other non-module-component based devices (e.g., end-user devices, vehicles, communication devices, computing devices, industrial equipment, retail/purchasing devices, medical devices, AI-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or OEM devices or systems incorporating one or more aspects of the described innovations. In some practical settings, devices incorporating described aspects and features may also necessarily include additional components and features for implementation and practice of claimed and described embodiments. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes and constitution.

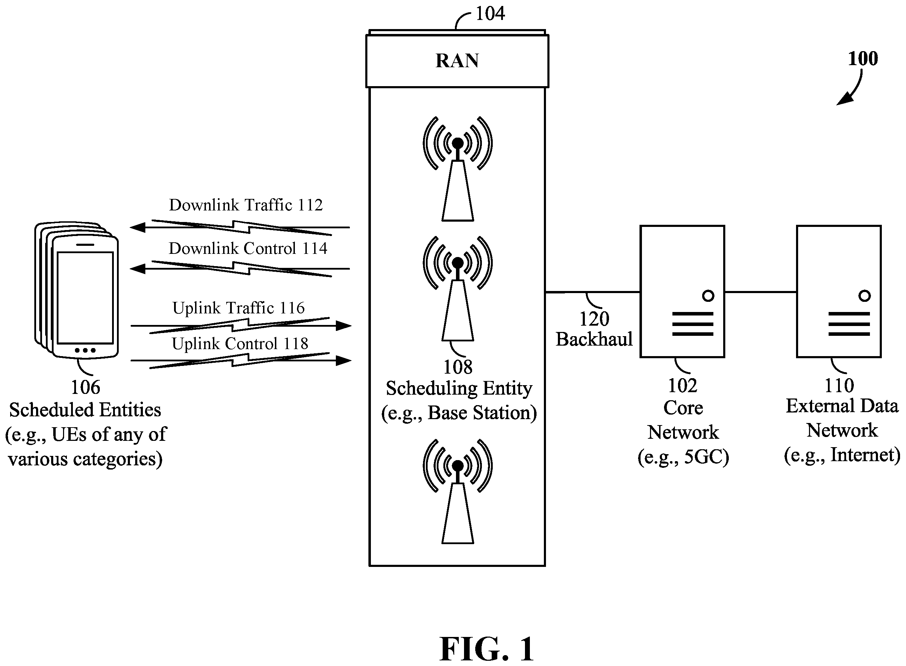

The disclosure that follows presents various concepts that may be implemented across a broad variety of telecommunication systems, network architectures, and communication standards. Referring now to **FIG. 1,** as an illustrative example without limitation, this schematic illustration shows various aspects of the present disclosure with reference to a wireless communication system 100. The wireless communication system 100 includes several interacting domains: a core network 102, a radio access network (RAN) 104, and a user equipment (UE) 106. By virtue of the wireless communication system 100, the UE 106 may be enabled to carry out data communication with an external data network 110, such as (but not limited to) the Internet.

The RAN 104 may implement any suitable wireless communication technology or technologies to provide radio access to the UE 106. As one example, the RAN 104 may operate according to 3rd Generation Partnership Project (3GPP) New Radio (NR) specifications, often referred to as 5G. As another example, the RAN 104 may operate under a hybrid of 5G NR and Evolved Universal Terrestrial Radio Access Network (eUTRAN) standards, often referred to as LTE. The 3GPP refers to this hybrid RAN as a next-generation RAN, or NG-RAN. Of course, many other examples may be utilized within the scope of the present disclosure.

As illustrated, the RAN 104 includes a plurality of base stations 108. Broadly, a base station is a network element in a radio access network responsible for radio transmission and reception in one or more cells to or from a UE. In different technologies, standards, or contexts, those skilled in the art may variously refer to a base station as a base transceiver station (BTS), a radio base station, a radio transceiver, a transceiver function, a basic service set (BSS), an extended service set (ESS), an access point (AP), a Node B (NB), an eNode B (eNB), a gNode B (gNB), or some other suitable terminology. As discussed further below, a base station may be within the scope of the term scheduling entity as used herein.

The radio access network 104 supports wireless communication for multiple mobile apparatuses. Those skilled in the art may refer to a mobile apparatus as user equipment (UE) in 3GPP standards, but may also be refer to a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology. A UE may be an apparatus that provides access to network services. A UE may take on many forms and can include a range of devices. As discussed further below, a UE may be within the scope of the term scheduled entity.

Within the present document, a "mobile" apparatus (aka a UE) need not necessarily have a capability to move, and may be stationary. The term mobile apparatus or mobile device broadly refers to a diverse array of devices and technologies. UEs may include a number of hardware structural components sized, shaped, and arranged to help in communication; such components can include antennas, antenna arrays, RF chains, amplifiers, one or more processors, etc. electrically coupled to each other. Further, the RAN 104 may support connection with multiple different categories of UEs having different capabilities and/or supporting different operations. For example, some nonlimiting examples of a mobile apparatus include a mobile, a cellular (cell) phone, a smart phone, a session initiation protocol (SIP) phone, a laptop, a personal computer (PC), a notebook, a netbook, a smartbook, a tablet, a personal digital assistant (PDA), and a broad array of embedded systems, e.g., corresponding to an "Internet of things" (IoT). A mobile apparatus may additionally be an automotive or other transportation vehicle, a remote sensor or actuator, a robot or robotics device, a satellite radio, a global positioning system (GPS) device, an object tracking device, a drone, a multi-copter, a quad-copter, a remote control device, a consumer and/or wearable device, such as eyewear, a wearable camera, a virtual reality device, a smart watch, a health or fitness tracker, a digital audio player (e.g., MP3 player), a camera, a game console, etc. In some examples, such mobile apparatus may operate as a companion device to another device (e.g., a paired smart phone), which can control or carry out at least some of its wireless operations. A mobile apparatus may additionally be a digital home or smart home device such as a home audio, video, and/or multimedia device, an appliance, a vending machine, intelligent lighting, a home security system, a smart meter, etc. A mobile apparatus may additionally be a smart energy device, a security device, a solar panel or solar array, a municipal infrastructure device controlling electric power (e.g., a smart grid), lighting, water, etc.; an industrial automation and enterprise device; a logistics controller; agricultural equipment; military defense equipment, vehicles, aircraft, ships, and weaponry, etc. Still further, a mobile apparatus may provide for connected medicine or telemedicine support, e.g., health care at a distance. Telehealth devices may include telehealth monitoring devices and telehealth administration devices, whose communication may be given preferential treatment or prioritized access over other types of information, e.g., in terms of prioritized access for transport of critical service data, and/or relevant QoS for transport of critical service data.

It has been observed that Rel-15 and Rel-16 of 3GPP specifications for 5G NR appear primarily to focus on the throughput of mobile broadband service, the reliability and latency of communications, and other verticals (e.g., vehicle-to-vehicle (V2V), vehicle-to-everything (V2X), and an industrial internet of things (IIOT)). However, there is a desire in the art for wireless networks to address use cases that can be implemented by reduced-capability UEs, sometimes referred to in 3GPP literature as RedCap UEs. For these use cases, UEs having peak, high, or even typical capabilities may not be required. Rather, it is desired that reduced-capability UEs (e.g., having one or more lower capabilities or reduced capabilities relative to a higher-capability device) may be deployed for these use cases, and configured to operate, e.g., with improved efficiency and cost-effectiveness. Some examples of these reduced-capability devices include wearable devices, industrial wireless sensor networks (IWSN), and surveillance cameras. Within the present disclosure, a reduced-capability UE or reduced-capability device generally refers to a UE having one or more reduced functional parameters, including but not limited to a reduction in supported bandwidth compared to legacy or conventional UEs such as smart phones; a reduced number of UE antennas; the use of half-duplex communication; relaxed UE processing time; and/or relaxed UE processing capability. Reduced-capability UEs may additionally or alternatively employ one or more power saving and battery lifetime enhancement features, such as reduced control channel monitoring, extended discontinuous reception (DRX) times, etc.

Wireless communication between a RAN 104 and a UE 106 may be described as utilizing an air interface.

Transmissions over the air interface from a base station (e.g., base station 108) to one or more UEs (e.g., UE 106) may be referred to as downlink (DL) transmission. In accordance with certain aspects of the present disclosure, the term downlink may refer to a point-to-multipoint transmission originating at a scheduling entity (described further below; e.g., base station 108). Another way to describe this scheme may be to use the term broadcast channel multiplexing. Transmissions from a UE (e.g., UE 106) to a base station (e.g., base station 108) may be referred to as uplink (UL) transmissions. In accordance with further aspects of the present disclosure, the term uplink may refer to a point-to-point transmission originating at a scheduled entity (described further below; e.g., UE 106).

In some examples, access to the air interface may be scheduled, wherein a scheduling entity (e.g., a base station 108) allocates resources for communication among some or all devices and equipment within its service area or cell. Within the present disclosure, as discussed further below, the scheduling entity may be responsible for scheduling, assigning, reconfiguring, and releasing resources for one or more scheduled entities. That is, for scheduled communication, UEs 106, which may be scheduled entities, may utilize resources allocated by the scheduling entity or base station 108.

Base stations 108 are not the only entities that may function as scheduling entities. That is, in some examples, a UE may function as a scheduling entity, scheduling resources for one or more scheduled entities (e.g., one or more other UEs).

As illustrated in FIG. 1, a scheduling entity 108 may broadcast downlink traffic 112 to one or more scheduled entities 106. Broadly, the scheduling entity 108 is a node or device responsible for scheduling traffic in a wireless communication network, including the downlink traffic 112 and, in some examples, uplink traffic 116 from one or more scheduled entities 106 to the scheduling entity 108. On the other hand, the scheduled entity 106 is a node or device that receives downlink control information 114, including but not limited to scheduling information (e.g., a grant), synchronization or timing information, or other control information from another entity in the wireless communication network such as the scheduling entity 108.

In general, base stations 108 may include a backhaul interface for communication with a backhaul portion 120 of the wireless communication system. The backhaul 120 may provide a link between a base station 108 and the core network 102. Further, in some examples, a backhaul network may provide interconnection between the respective base stations 108. Various types of backhaul interfaces may be employed, such as a direct physical connection, a virtual network, or the like using any suitable transport network.

The core network 102 may be a part of the wireless communication system 100, and may be independent of the radio access technology used in the RAN 104. In some examples, the core network 102 may be configured according to 5G standards (e.g., 5GC). In other examples, the core network 102 may be configured according to a 4G evolved packet core (EPC), or any other suitable standard or configuration.

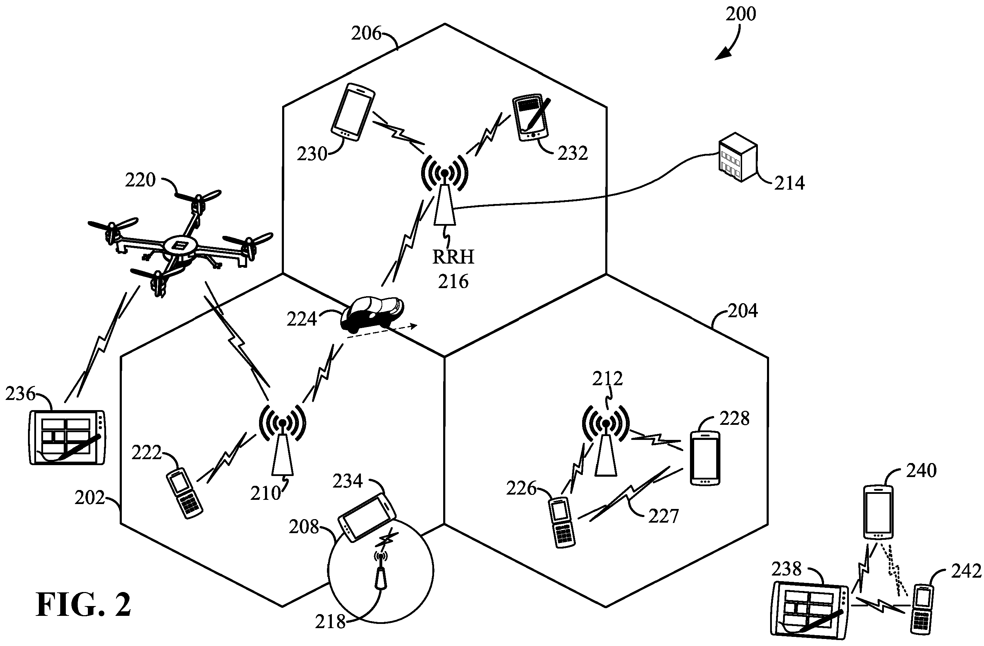

FIG. 2 provides a schematic illustration of a RAN 200, by way of example and without limitation. In some examples, the RAN 200 may be the same as the RAN 104 described above and illustrated in FIG. 1. The geographic area covered by the RAN 200 may be divided into cellular regions (cells) that a user equipment (UE) can uniquely identify based on an identification broadcasted from one access point or base station. FIG. 2 illustrates macrocells 202, 204, and 206, and a small cell 208, each of which may include one or more sectors (not shown). A sector is a sub-area of a cell. All sectors within one cell are served by the same base station. A radio link within a sector can be identified by a single logical identification belonging to that sector. In a cell that is divided into sectors, the multiple sectors within a cell can be formed by groups of antennas with each antenna responsible for communication with UEs in a portion of the cell.

FIG. 2 shows two base stations 210 and 212 in cells 202 and 204; and shows a third base station 214 controlling a remote radio head (RRH) 216 in cell 206. That is, a base station can have an integrated antenna or can be connected to an antenna or RRH by feeder cables. In the illustrated example, the cells 202, 204, and 126 may be referred to as macrocells, as the base stations 210, 212, and 214 support cells having a large size. Further, a base station 218 is shown in the small cell 208 (e.g., a microcell, picocell, femtocell, home base station, home Node B, home eNode B, etc.) which may overlap with one or more macrocells. In this example, the cell 208 may be referred to as a small cell, as the base station 218 supports a cell having a relatively small size. Cell sizing can be done according to system design as well as component constraints.

The RAN 200 may include any number of wireless base stations and cells. Further, a RAN may include a relay node to extend the size or coverage area of a given cell. The base stations 210, 212, 214, 218 provide wireless access points to a core network for any number of mobile apparatuses. In some examples, the base stations 210, 212, 214, and/or 218 may be the same as the base station/scheduling entity 108 described above and illustrated in FIG. 1.

FIG. 2 further includes a quadcopter or drone 220, which may be configured to function as a base station. That is, in some examples, a cell may not necessarily be stationary, and the geographic area of the cell may move according to the location of a mobile base station such as the quadcopter 220.

Within the RAN 200, the cells may include one or more UEs that may be in communication with one or more sectors of each cell. Further, each base station 210, 212, 214, 218, and 220 may be configured to provide an access point to a core network 102 (see FIG. 1) for the UEs in the respective cells. For example, UEs 222 and 224 may be in communication with base station 210; UEs 226 and 228 may be in communication with base station 212; UEs 230 and 232 may be in communication with base station 214 by way of RRH 216; UE 234 may be in communication with base station 218; and UE 236 may be in communication with mobile base station 220. In some examples, the UEs 222, 224, 226, 228, 230, 232, 234, 236, 238, 240, and/or 242 may be the same as the UE/scheduled entity 106 described above and illustrated in FIG. 1.

In some examples, a mobile network node (e.g., quadcopter 220) may be configured to function as a UE. For example, the quadcopter 220 may operate within cell 202 by communicating with base station 210.

In a further aspect of the RAN 200, sidelink signals may be used between UEs without necessarily relying on scheduling or control information from a base station. For example, two or more UEs (e.g., UEs 226 and 228) may communicate with each other using peer to peer (P2P) or sidelink signals 227 without relaying that communication through a base station (e.g., base station 212). In a further example, UE 238 is illustrated communicating with UEs 240 and 242. Here, the UE 238 may function as a scheduling entity or a primary sidelink device, and UEs 240 and 242 may function as a scheduled entity or a non-primary (e.g., secondary) sidelink device. In still another example, a UE may function as a scheduling entity in a device-to-device (D2D), peer-to-peer (P2P), or vehicle-to-vehicle (V2V) network, and/or in a mesh network. In a mesh network example, UEs 240 and 242 may optionally communicate directly with one another in addition to communicating with the scheduling entity 238. Thus, in a wireless communication system with scheduled access to time-frequency resources and having a cellular configuration, a P2P configuration, or a mesh configuration, a scheduling entity and one or more scheduled entities may communicate utilizing the scheduled resources.

The air interface in the RAN 200 may utilize one or more duplexing techniques. Duplex refers to a point-to-point communication link where both endpoints can communicate with one another in both directions. Full duplex means both endpoints can simultaneously communicate with one another. Half duplex means only one endpoint can send information to the other at a time utilizing a given resource. In a wireless link, a full duplex channel generally relies on physical isolation of a transmitter and receiver, and suitable interference cancellation technologies. Full duplex emulation is frequently implemented for wireless links by utilizing frequency division duplex (FDD) or time division duplex (TDD). In FDD, transmissions in different directions operate at different carrier frequencies. In TDD, transmissions in different directions on a given channel are separated from one another using time division multiplexing. That is, at some times the channel is dedicated for transmissions in one direction, while at other times the channel is dedicated for transmissions in the other direction, where the direction may change very rapidly, e.g., several times per slot.

The air interface in the RAN 200 may further utilize one or more multiplexing and multiple access techniques to enable simultaneous communication of the various devices. For example, 5G NR specifications provide multiple access for UL transmissions from UEs 222 and 224 to base station 210, and for multiplexing for DL transmissions from base station 210 to one or more UEs 222 and 224, utilizing orthogonal frequency division multiplexing (OFDM) with a cyclic prefix (CP). In addition, for UL transmissions, 5G NR specifications provide support for discrete Fourier transform-spread-OFDM (DFT-s-OFDM) with a CP (also referred to as single-carrier FDMA (SC-FDMA)). However, within the scope of the present disclosure, multiplexing and multiple access are not limited to the above schemes. For example, a UE may provide for UL multiple access utilizing time division multiple access (TDMA), code division multiple access (CDMA), frequency division multiple access (FDMA), sparse code multiple access (SCMA), resource spread multiple access (RSMA), or other suitable multiple access schemes. Further, a base station may multiplex DL transmissions to UEs utilizing time division multiplexing (TDM), code division multiplexing (CDM), frequency division multiplexing (FDM), orthogonal frequency division multiplexing (OFDM), sparse code multiplexing (SCM), or other suitable multiplexing schemes.

The radio protocol architecture may take on various forms depending on the particular application. According to some examples, a radio protocol may be described according to three layers. Here, layer 1 is the lowest layer and implements various physical layer signal processing functions. Layer 1 will be referred to herein as the physical layer. Layer 2 is responsible for the link between the UE and base station over the physical layer.

In the user plane, layer 2 includes a media access control (MAC) sublayer, a radio link control (RLC) sublayer, and a packet data convergence protocol (PDCP) sublayer. The MAC sublayer provides multiplexing between logical channels and transport channels. The MAC sublayer is also responsible for allocating the various radio resources (e.g., resource blocks) in one cell among UEs. The MAC sublayer is also responsible for hybrid automatic repeat request (HARQ) operations. The RLC sublayer provides segmentation and reassembly of upper layer data packets, retransmission of lost data packets, and reordering of data packets to compensate for out-of-order reception due to HARQ. The PDCP sublayer provides multiplexing between different radio bearers and logical channels. The PDCP sublayer also provides header compression for upper layer data packets to reduce radio transmission overhead, security by ciphering the data packets, and handover support for UEs between base stations. A UE may have several upper layers above layer 2 including, e.g., a network layer (e.g., IP layer) and an application layer.

In the control plane, the radio protocol architecture is largely the same for the physical layer and for layer 2. In layer 3, the control plane also includes a radio resource control (RRC) sublayer. The RRC sublayer is responsible for obtaining radio resources (i.e., radio bearers) and for configuring the lower layers using RRC signaling between the base station and the UE.

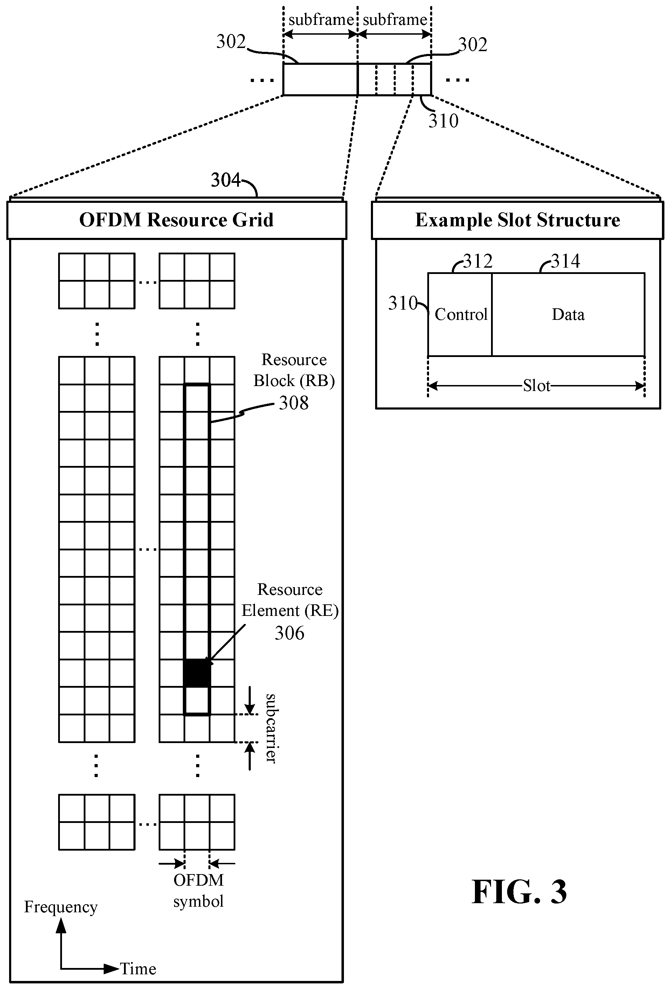

**FIG. 3** schematically illustrates various aspects of the present disclosure with reference to an OFDM waveform. Those of ordinary skill in the art should understand that the various aspects of the present disclosure may be applied to a DFT-s-OFDMA waveform in substantially the same way as described herein below. That is, while some examples of the present disclosure may focus on an OFDM link for clarity, it should be understood that the same principles may be applied as well to DFT-s-OFDMA waveforms.

In some examples, a frame may refer to a predetermined duration of time (e.g., 10 ms) for wireless transmissions. And further, each frame may consist of a set of subframes (e.g., 10 subframes of 1 ms each). A given carrier may include one set of frames in the UL, and another set of frames in the DL. FIG. 3 illustrates an expanded view of an exemplary DL subframe 302, showing an OFDM resource grid 304. However, as those skilled in the art will readily appreciate, the physical transmission structure for any particular application may vary from the example described here, depending on any number of factors. Here, time is in the horizontal direction with units of OFDM symbols; and frequency is in the vertical direction with units of subcarriers or tones.

The resource grid 304 may schematically represent time-frequency resources for a given antenna port. That is, in an example that employs multiple-input multiple-output (MIMO), or spatial multiplexing, with multiple antenna ports available, a corresponding multiple number of resource grids 304 may be available for communication. Each resource grid 304 is divided into multiple resource elements (REs) 306. An RE, which is 1 subcarrier $\times$ 1 symbol, is the smallest discrete part of the time-frequency grid, and may contain a single complex value representing data from a physical channel or signal. Depending on the modulation utilized in a particular implementation, each RE may represent one or more bits of information. In some examples, a block of REs may be referred to as a physical resource block (PRB) or more simply a resource block (RB) 308, which contains any suitable number of consecutive subcarriers in the frequency domain. In one example, an RB may include 12 subcarriers, a number independent of the numerology used. In some examples, depending on the numerology, an RB may include any suitable number of consecutive OFDM symbols in the time domain. The present disclosure assumes, by way of example, that a single RB such as the RB 308 entirely corresponds to a single direction of communication (either transmission or reception for a given device). Such an RB may often times be used as a unit of bandwidth for a description of the bandwidth of a set of resources (e.g., a channel may be transmitted with a bandwidth of $n$ RBs).

A UE generally utilizes only a subset of the resource grid 304. An RB may be the smallest unit of resources that a scheduler can allocate to a UE. Thus, the more RBs scheduled for a UE, and the higher the modulation scheme chosen for the air interface, the higher the data rate for the UE.

In this illustration, the RB 308 occupies less than the entire bandwidth of the subframe 302, with some subcarriers illustrated above and below the RB 308. In a given implementation, the subframe 302 may have a bandwidth corresponding to any number of one or more RBs 308. Further, the RB 308 is shown occupying less than the entire duration of the subframe 302, although this is merely one possible example.

Each 1 ms subframe 302 may consist of one or multiple adjacent slots. In FIG. 3, one subframe 302 includes four slots 310, as an illustrative example. In some examples, a slot may be defined according to a specified number of OFDM symbols with a given cyclic prefix (CP) length. For example, a slot may include 7 or 14 OFDM symbols with a nominal CP. Additional examples may include mini-slots having a shorter duration (e.g., one or two OFDM symbols). A base station may in some cases transmit these mini-slots occupying resources scheduled for ongoing slot transmissions for the same or for different UEs.

An expanded view of one of the slots 310 illustrates the slot 310 including a control region 312 and a data region 314. In general, the control region 312 may carry control channels (e.g., PDCCH), and the data region 314 may carry data channels (e.g., PDSCH or PUSCH). Of course, a slot may contain all DL, all UL, or at least one DL portion and at least one UL portion. The simple structure illustrated in FIG. 3 is merely exemplary in nature, and different slot structures may be utilized, and may include one or more of each of the control region(s) and data region(s).

Although not illustrated in FIG. 3, the various REs 306 within a given transmission may carry one or more physical channels, including control channels, shared channels, data channels, etc. Other REs 306 within the RB 308 may also carry pilots or reference signals. These pilots or reference signals may provide for a receiving device to perform channel estimation of the corresponding channel, which may enable coherent demodulation/detection of the control and/or data channels within the transmission.

In a DL transmission, the transmitting device (e.g., a scheduling entity 108) may allocate one or more REs 306 (e.g., within a control region 312) to carry one or more DL control channels. These DL control channels include DL control information (DCI) 114 that generally carries information originating from higher layers, such as a physical broadcast channel (PBCH), a physical downlink control channel (PDCCH), etc., to one or more scheduled entities 106. In addition, the transmitting device may allocate one or more DL REs to carry DL physical signals that generally do not carry information originating from higher layers. These DL physical signals may include a primary synchronization signal (PSS); a secondary synchronization signal (SSS); demodulation reference signals (DM-RS); phase-tracking reference signals (PT-RS); channel-state information reference signals (CSI-RS); etc.

In some examples, a scheduling entity may periodically, episodically, and/or on-demand transmit an SS block (SSB) that includes the synchronization signals PSS and SSS (collectively referred to as SS) and the PBCH. An SSB may include 4 consecutive OFDM symbols, and may extend over 240 contiguous subcarriers. Of course, the present disclosure is not limited to this specific SSB configuration. Other nonlimiting examples may utilize greater or fewer than two synchronization signals; may include one or more supplemental channels in addition to the PBCH; may omit a PBCH; and/or may utilize nonconsecutive symbols or noncontiguous subcarriers for an SSB, within the scope of the present disclosure.

The PDCCH may carry downlink control information (DCI) for one or more UEs in a cell. This can include, but is not limited to, power control commands, scheduling information, a grant, and/or an assignment of REs for DL and UL transmissions.

In an UL transmission, a transmitting device (e.g., a scheduled entity 106) may utilize one or more REs 306 to carry one or more UL control channels, such as a physical uplink control channel (PUCCH), a physical random access channel (PRACH), etc. These UL control channels include UL control information 118 (UCI) that generally carries information originating from higher layers. Further, UL REs may carry UL physical signals that generally do not carry information originating from higher layers, such as demodulation reference signals (DM-RS), phase-tracking reference signals (PT-RS), sounding reference signals (SRS), etc. In some examples, the control information 118 may include a scheduling request (SR), i.e., a request for the scheduling entity 108 to schedule uplink transmissions. Here, in response to the SR transmitted on the control channel 118, the scheduling entity 108 may transmit downlink control information 114 that may schedule resources for uplink packet transmissions.

UL control information may also include hybrid automatic repeat request (HARQ) feedback such as an acknowledgment (ACK) or negative acknowledgment (NACK), channel state information (CSI), or any other suitable UL control information. HARQ is a technique well-known to those of ordinary skill in the art, wherein a receiving device can check the integrity of packet transmissions for accuracy, e.g., utilizing any suitable integrity checking mechanism, such as a checksum or a cyclic redundancy check (CRC). If the receiving device confirms the integrity of the transmission, it may transmit an ACK, whereas if not confirmed, it may transmit a NACK. In response to a NACK, the transmitting device may send a HARQ retransmission, which may implement chase combining, incremental redundancy, etc.

In addition to control information, one or more REs 306 (e.g., within the data region 314) may be allocated for user data or traffic data. Such traffic may be carried on one or more traffic channels, such as, for a DL transmission, a physical downlink shared channel (PDSCH); or for an UL transmission, a physical uplink shared channel (PUSCH).

The channels or carriers described above and illustrated in FIGs. 1 and 3 are not necessarily all the channels or carriers that may be utilized between a scheduling entity 108 and scheduled entities 106, and those of ordinary skill in the art will recognize that other channels or carriers may be utilized in addition to those illustrated, such as other traffic, control, and feedback channels.

In OFDM, to maintain orthogonality of the subcarriers or tones, the subcarrier spacing may be equal to the inverse of the symbol period. A numerology of an OFDM waveform refers to its particular subcarrier spacing and cyclic prefix (CP) overhead. A scalable numerology refers to the capability of the network to select different subcarrier spacings, and accordingly, with each spacing, to select the corresponding symbol duration, including the CP length. With a scalable numerology, a nominal subcarrier spacing (SCS) may be scaled upward or downward by integer multiples. In this manner, regardless of CP overhead and the selected SCS, symbol boundaries may be aligned at certain common multiples of symbols (e.g., aligned at the boundaries of each 1 ms subframe). The range of SCS may include any suitable SCS. For example, a scalable numerology may support a SCS ranging from 15 kHz to 480 kHz.

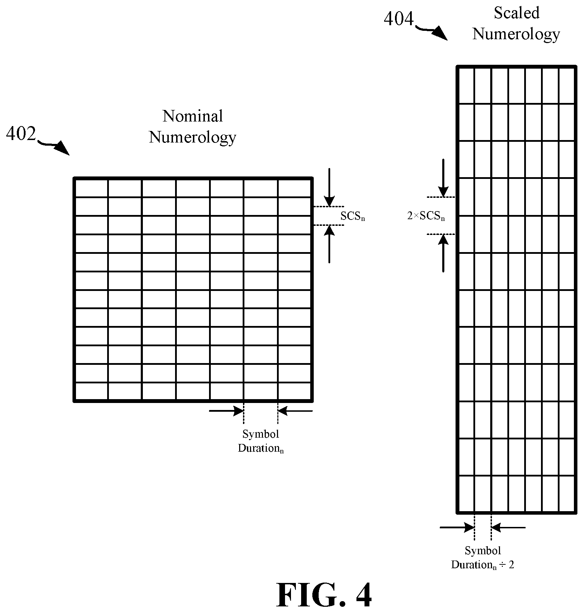

To illustrate this concept of a scalable numerology, FIG. 4 shows a first RB 402 having a nominal numerology, and a second RB 404 having a scaled numerology. As one example, the first RB 402 may have a 'nominal' subcarrier spacing ($SCS_n$) of 30 kHz, and a 'nominal' symbol duration$_n$ of 333 $\mu$s. Here, in the second RB 404, the scaled numerology includes a scaled SCS of double the nominal SCS, or $2 \times SCS_n = 60$ kHz. Because this provides twice the bandwidth per symbol, it results in a shortened symbol duration to carry the same information. Thus, in the second RB 404, the scaled numerology includes a scaled symbol duration of half the nominal symbol duration, or (symbol duration$_n$)$\div 2 = 167$ $\mu$s.

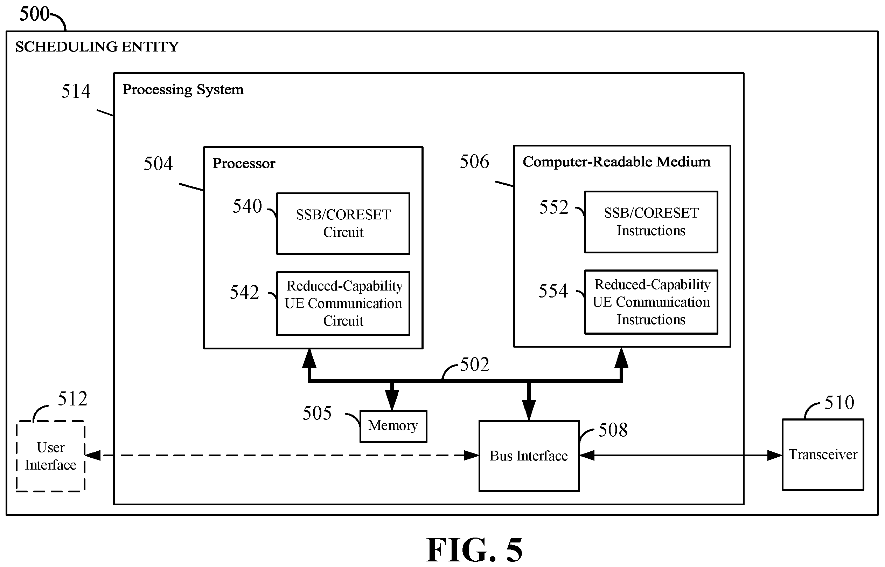

FIG. 5 is a block diagram illustrating an example of a hardware implementation for a scheduling entity 500 employing a processing system 514. For example, the scheduling entity 500 may be a user equipment (UE) as illustrated in any one or more of FIGs. 1, 2, 7, 10, 12, 14, 16, and/or 18. In another example, the scheduling entity 500 may be a base station (e.g., a gNB) as illustrated in any one or more of FIGs. 1, 2, 10, 12, 14, 16, and/or 18. In some scenarios, one device may have both scheduling and scheduled functionality. This enables a single device to act as either a base station or UE according to desired operations.

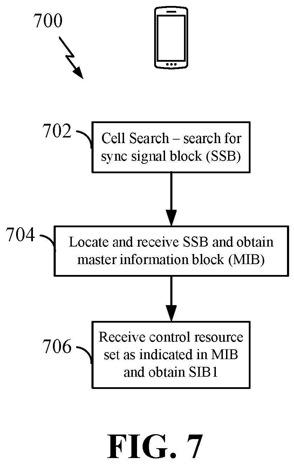

The scheduling entity 500 may include a processing system 514 having one or more processors 504. Examples of processors 504 include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. In various examples, the scheduling entity 500 may be configured to perform any one or more of the functions described herein. That is, the processor 504, as utilized in a scheduling entity 500, may be configured (e.g., in coordination with the memory 505) to implement any one or more of the processes and procedures described below and illustrated in FIGs. 7-18.

The processing system 514 may be implemented with a bus architecture, represented generally by the bus 502. The bus 502 may include any number of interconnecting buses and bridges depending on the specific application of the processing system 514 and the overall design constraints. The bus 502 communicatively couples together various circuits including one or more processors (represented generally by the processor 504), a memory 505, and computer-readable media (represented generally by the computer-readable medium 506). The bus 502 may also link various other circuits such as timing sources, peripherals, voltage regulators, and power management circuits, which are well known in the art, and therefore, will not be described any further. A bus interface 508 provides an interface between the bus 502 and a transceiver 510. The transceiver 510 provides a communication interface or means for communicating with various other apparatus over a transmission medium. Depending upon the nature of the apparatus, a user interface 512 (e.g., keypad, display, speaker, microphone, joystick) may also be provided. Of course, such a user interface 512 is optional, and some examples, such as a base station, may omit it.

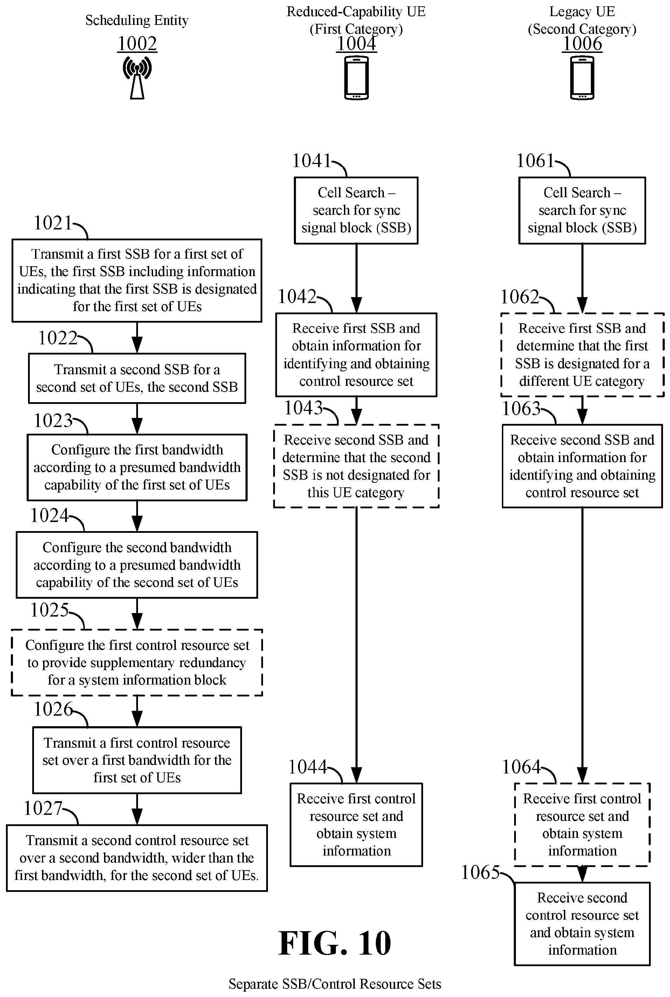

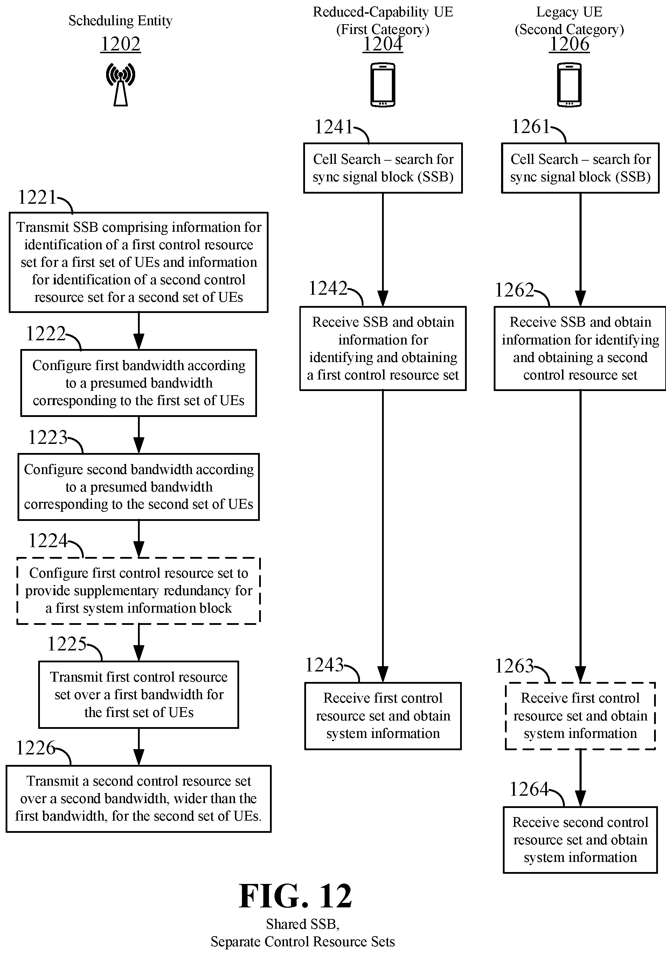

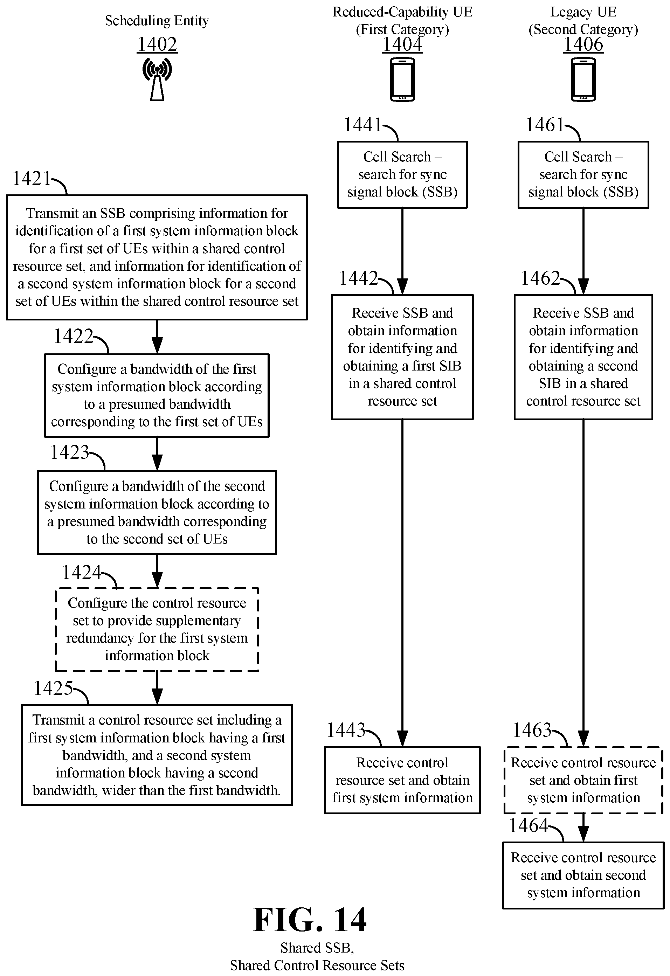

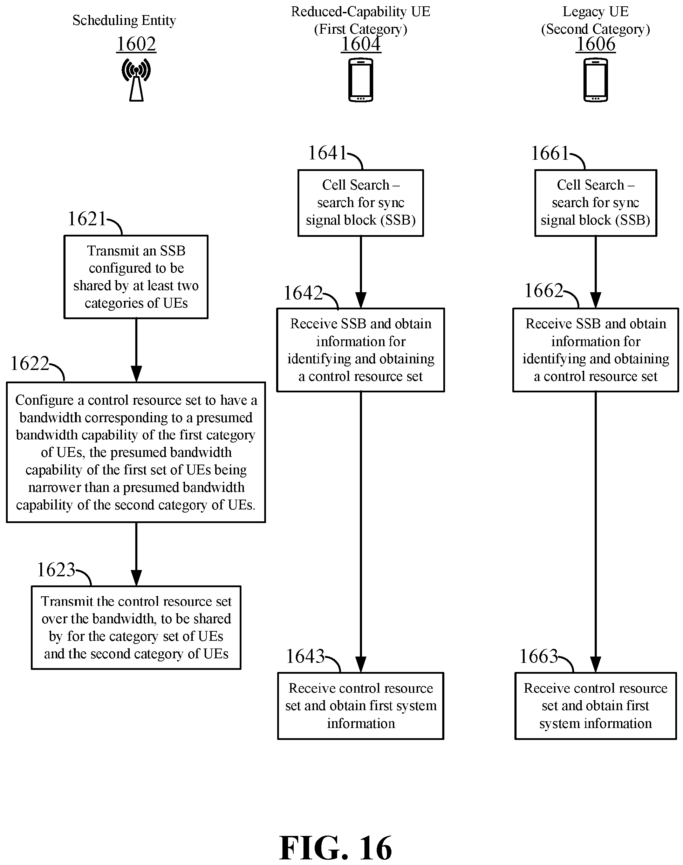

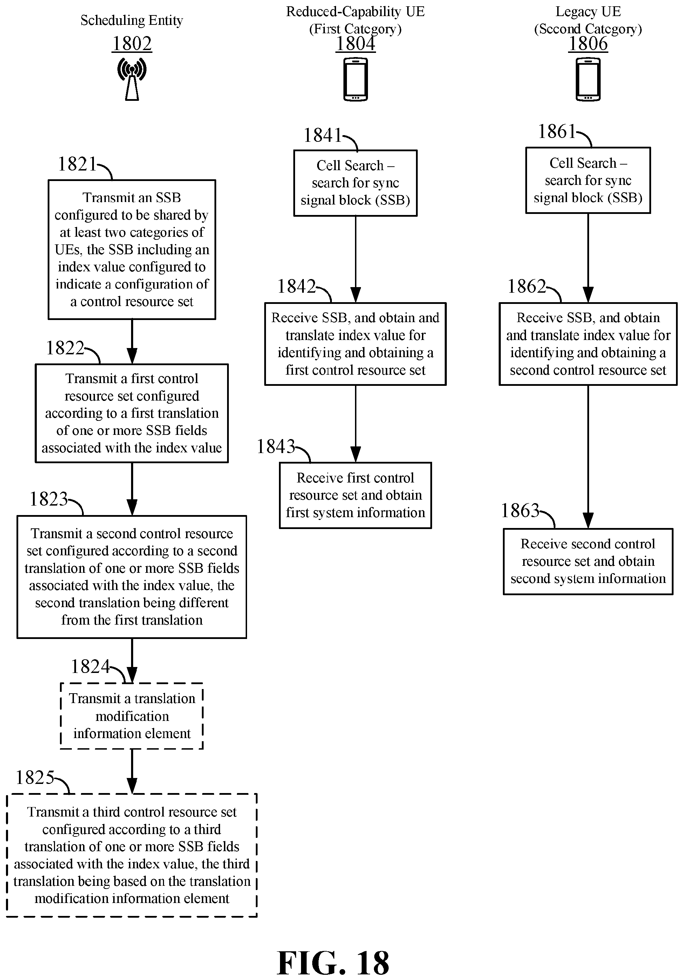

In some aspects of the disclosure, the processor 504 may include SSB/CORESET circuitry 540. The circuitry 540 may be configured (e.g., in coordination with the memory 505) for various functions, including, for example, configuring and/or transmitting one or more SSBs and/or CORESETs. For example, the SSB/CORESET circuitry 540 may be configured to implement one or more of the functions described below in relation to FIG. 10, including, e.g., blocks 1021-1027; FIG. 12, including, e.g., blocks 1221-1226; FIG. 14, including, e.g., blocks 1421-1425; FIG. 16, including, e.g., blocks 1621-1623; and/or FIG. 18, including, e.g., blocks 1821-1825. The SSB/CORESET circuitry 540 can include a communication interface and take form as a receiver, transmitter, or transceiver. SSB/CORESET circuitry 540 may be one or more components.

The processor 504 may further include reduced-capability UE communication circuitry 542. The circuitry 542 may be configured (e.g., in coordination with the memory 505) for various functions, including, for example, communicating with one or more types or categories of reduced-capability UEs, in addition to legacy or other UEs. For example, the reduced-capability UE communication circuitry 542 may be configured to implement one or more of the functions described below in relation to FIG. 10, including, e.g., blocks 1021-1027; FIG. 12, including, e.g., blocks 1221-1226; FIG. 14, including, e.g., blocks 1421-1425; FIG. 16, including, e.g., blocks 1621-1623; and/or FIG. 18, including, e.g., blocks 1821-1825. The reduced-capability communication circuitry 542 can include a communication interface and take form as a receiver, transmitter, or transceiver. Communication circuitry 542 may be one or more components.

The processor 504 is generally responsible for managing the bus 502 and general processing, including the execution of software stored on the computer-readable medium 506. The software, when executed by the processor 504, causes the processing system 514 to perform the various functions described below for any particular apparatus. The processor 504 may also use the computer-readable medium 506 and the memory 505 for storing data that the processor 504 manipulates when executing software.

One or more processors 504 in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium 506. The computer-readable medium 506 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable medium 506 may reside in the processing system 514, external to the processing system 514, or distributed across multiple entities including the processing system 514. The computer-readable medium 506 may be embodied in a computer program product. By way of example, a computer program product may include a computer-readable medium in packaging materials. Those skilled in the art will recognize how best to implement the described functionality presented throughout this disclosure depending on the particular application and the overall design constraints imposed on the overall system.

In one or more examples, the computer-readable storage medium 506 may store computer-executable code that includes SSB/CORESET instructions 562 that configure a scheduling entity 500 for various functions, including, e.g., configuring and/or transmitting one or more SSBs and/or CORESETs. For example, the SSB/CORESET instructions 562 may be configured to cause a scheduling entity 500 to implement one or more of the functions described below in relation to FIG. 10, including, e.g., blocks 1021-1027; FIG. 12, including, e.g., blocks 1221-1226; FIG. 14, including, e.g., blocks 1421-1425; FIG. 16, including, e.g., blocks 1621-1623; and/or FIG. 18, including, e.g., blocks 1821-1825.

In one configuration, the apparatus 500 for wireless communication includes means for transmitting one or more signals (e.g., a transceiver 510) and means for configuring a signal transmission (e.g., SSB/CORESET circuitry 540 and/or reduced-capability UE communication circuitry 542) In one aspect, the aforementioned means may be the processor(s) 504 shown in FIG. 5 configured to perform the functions recited by the aforementioned means. In another aspect, the aforementioned means may be a circuit or any apparatus configured to perform the functions recited by the aforementioned means.

Of course, in the above examples, the circuitry included in the processor 504 is merely provided as an example, and other means for carrying out the described functions may be included within various aspects of the present disclosure, including but not limited to the instructions stored in the computer-readable storage medium 506, or any other suitable apparatus or means described in any one of the FIGs. 1, 2, 5, and/or 6, and utilizing, for example, the processes and/or algorithms described herein in relation to FIGs. 7, 8, 9, 10, 11, 12, 13, 14, 15, 16, 17, and/or 18.

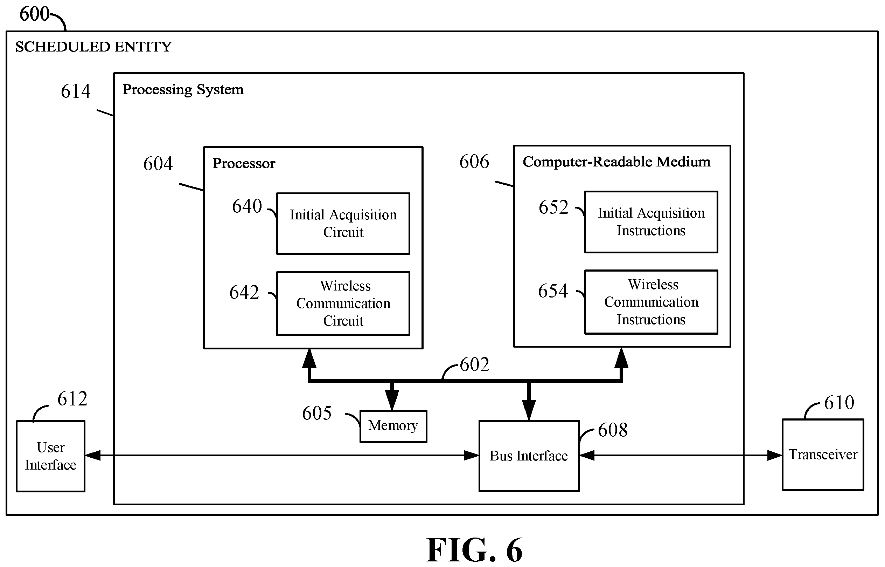

**FIG. 6** is a conceptual diagram illustrating an example of a hardware implementation for an exemplary scheduled entity 600 employing a processing system 614. In accordance with various aspects of the disclosure, an element, or any portion of an element, or any combination of elements may be implemented with a processing system 614 that includes one or more processors 604. For example, the scheduled entity 600 may be a user equipment (UE) such as a reduced-capability (RedCap) UE, a low-end RedCap UE, a high-end RedCap UE, or a legacy UE as illustrated in any one or more of FIGs. 1, 2, 7, 10, 12, 14, 16, and/or 18.

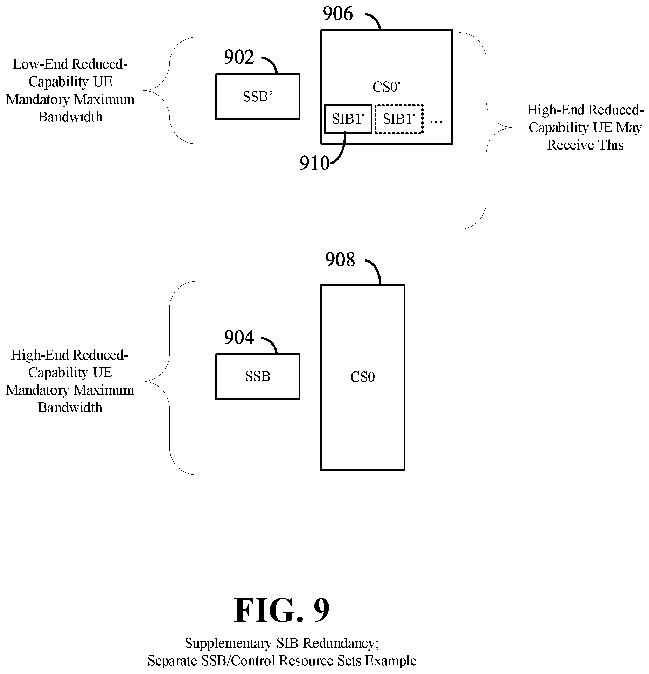

The processing system 614 may be substantially the same as the processing system 514 illustrated in FIG. 5, including a bus interface 608, a bus 602, memory 605, a processor 604, and a computer-readable medium 606. Furthermore, the scheduled entity 600 may include a user interface 612 and a transceiver 610 substantially similar to those described above in FIG. 5. That is, the processor 804, as utilized in a scheduled entity 800, may be configured (e.g., in coordination with the memory 805) to implement any one or more of the processes described below and illustrated in FIG. 9.

In some aspects of the disclosure, the processor 604 may include initial acquisition circuitry 640 configured (e.g., in coordination with the memory 605) for various functions, including, for example, searching for, receiving, decoding, and/or processing an SSB/control resource set and corresponding system information. For example, the initial acquisition circuitry 640 may be configured to implement one or more of the functions described below in relation to FIG. 7, including, e.g., blocks 702-706; FIG. 10, including, e.g., blocks 1041-1044 and/or 1061-1065; FIG. 12, including, e.g., blocks 1241-1243 and/or blocks 1261-1264; FIG. 14, including, e.g., blocks 1441-1443 and/or blocks 1461-1464; FIG. 16, including, e.g., blocks 1641-1643 and/or blocks 1661-1663; and/or FIG. 18, including, e.g., blocks 1841-1843 and/or blocks 1861-1863.

The processor 604 may further include wireless communication circuitry 642 configured (e.g., in coordination with the memory 605) for various functions, including, for example, wireless communication with a radio access network. For example, the wireless communication circuitry 642 may be configured to implement one or more of the functions described below in relation to FIG. 7, including, e.g., blocks 702-706; FIG. 10, including, e.g., blocks 1041-1044 and/or 1061-1065; FIG. 12, including, e.g., blocks 1241-1243 and/or blocks 1261-1264; FIG. 14, including, e.g., blocks 1441-1443 and/or blocks 1461-1464; FIG. 16, including, e.g., blocks 1641-1643 and/or blocks 1661-1663; and/or FIG. 18, including, e.g., blocks 1841-1843 and/or blocks 1861-1863.

And further, the computer-readable storage medium 606 may store computer-executable code that includes initial acquisition instructions 652 that configure a scheduled entity 600 for various functions, including, e.g., searching for, receiving, decoding, and/or processing an SSB/control resource set and corresponding system information. For example, the initial acquisition instructions 652 may be configured to cause a scheduled entity 600 to implement one or more of the functions described below in relation to FIG. 7, including, e.g., blocks 702-706; FIG. 10, including, e.g., blocks 1041-1044 and/or 1061-1065; FIG. 12, including, e.g., blocks 1241-1243 and/or blocks 1261-1264; FIG. 14, including, e.g., blocks 1441-1443 and/or blocks 1461-1464; FIG. 16, including, e.g., blocks 1641-1643 and/or blocks 1661-1663; and/or FIG. 18, including, e.g., blocks 1841-1843 and/or blocks 1861-1863.

The computer-readable storage medium 606 may store computer-executable code that wireless communication instructions 654 that configure a scheduled entity 600 for various functions, including, e.g., wireless communication with a radio access network. For example, the wireless communication instructions 654 may be configured to cause a scheduled entity 600 to implement one or more of the functions described below in relation to FIG. 7, including, e.g., blocks 702-706; FIG. 10, including, e.g., blocks 1041-1044 and/or 1061-1065; FIG. 12, including, e.g., blocks 1241-1243 and/or blocks 1261-1264; FIG. 14, including, e.g., blocks 1441-1443 and/or blocks 1461-1464; FIG. 16, including, e.g., blocks 1641-1643 and/or blocks 1661-1663; and/or FIG. 18, including, e.g., blocks 1841-1843 and/or blocks 1861-1863.

In one configuration, the apparatus 600 for wireless communication includes means for transmitting and receiving wireless signals, means for scanning a set of frequencies for wireless network acquisition, and means for establishing a connection with the wireless network. In one aspect, the aforementioned means may be the processor 604 shown in 6 configured to perform the functions recited by the aforementioned means. In another aspect, the aforementioned means may be a circuit or any apparatus configured to perform the functions recited by the aforementioned means.

Of course, in the above examples, the circuitry included in the processor 604 is merely provided as an example, and other means for carrying out the described functions may be included within various aspects of the present disclosure, including but not limited to the instructions stored in the computer-readable storage medium 606, or any other suitable apparatus or means described in any one of the FIGs. 1, 2, 5, and/or 6, and utilizing, for example, the processes and/or algorithms described herein in relation to FIGs. 7, 8, 9, 10, 11, 12, 13, 14, 15, 16, 17, and/or 18.

In some aspects of the disclosure, the processor 604 may include initial acquisition circuitry 640 configured for various functions, including, for example, searching for, receiving, decoding, and/or processing an SSB/control resource set and corresponding system information. The processor 604 may further include wireless communication circuitry 642 configured for various functions, including, for example, wireless communication with a radio access network.

## Reduced-Capability Devices and Initial Network Acquisition

For any wireless device operating in a given network, one important capability that affects that device's operation in that network is the bandwidth or bandwidth range that that device can support. And in some examples, a given UE may be capable of dynamically modifying its bandwidth; e.g., a range of frequencies it uses to communicate with the network. Here, a bandwidth may correspond to a difference between an upper frequency and a lower frequency, and is not intended to imply any particular frequency. For example, a UE may utilize a narrower bandwidth (e.g., a relatively smaller difference between upper and lower frequencies) to save energy, or a wider bandwidth (e.g., a relatively larger difference between upper and lower frequencies) to increase a data rate. A UE with dynamic bandwidth capability may be capable of supporting one or more bandwidths (e.g., between a minimum bandwidth and a maximum bandwidth, a range of bandwidth operations, or modifying bandwidth usage during operations).

Bandwidth ranges may also be used in various deployments. For example, according to an aspect of this disclosure, a maximum bandwidth that a UE is required to support for operation in a given network is called a "mandatory maximum bandwidth" for that network. Put another way, a UE with a dynamic bandwidth capability as described above can support a maximum bandwidth greater than or equal to a specified minimum value or threshold value that may be referred to as a mandatory maximum bandwidth to operate on that network. A UE is free to support a larger bandwidth if it is capable; e.g., a UE may support a maximum bandwidth that is wider than a mandatory maximum bandwidth. And the UE may also support a smaller bandwidth if allowed; e.g., a UE may support and employ a narrower bandwidth than the mandatory maximum bandwidth, but that UE should nevertheless be capable of supporting at least the mandatory maximum bandwidth as well. That is, the mandatory maximum bandwidth generally must be supported if the network is to support such a UE.

In various aspects of the present disclosure, a network may support wireless communication service for a UE that uses or employs a relatively narrow bandwidth. Such a UE may be referred to in the art as a reduced-capability UE or RedCap UE. Here, a narrow bandwidth is not specifically referring to any specific bandwidth yet rather refers generally to a bandwidth that is reduced or narrower relative to a bandwidth that another UE may employ for wireless communication service on the same network.

Networks supporting RedCap UEs may do so with a variety of features. In a network that supports reduced-capability UEs, it may be possible that the network supports more than one type of reduced-capability device, each having different capabilities. For example, different reduced-capability device types may have different supported bandwidths. Accordingly, these different reduced-capability device types can be categorized according to a given capability and/or operational parameter. The categorization of such device types can be structured in any number of suitable ways, including but not limited to device type (e.g., IoT devices, smart wearables, sensors, cameras, etc.), or device capability (e.g., low supported bandwidth, high supported bandwidth, etc.).

UEs discussed herein may access a communication network in various manners. An initial acquisition procedure may provide for a UE to acquire initial access (e.g., an attachment or connection) to a network, e.g., when a UE is powered on. To facilitate initial network acquisition, a scheduling entity may provide system information (SI) characterizing its corresponding cell to proximate UEs. The scheduling entity may provide this system information in a plurality of components, e.g., utilizing a component called minimum system information (MSI), and another component called other system information (OSI). To this end, the scheduling entity may periodically, episodically, or on-demand broadcast the synchronization signal block (SSB) over the cell. Such an SSB may include a physical broadcast channel (PBCH), which can carry a set of information corresponding to the MSI, to provide the most basic information a UE requires for initial cell access, and for enabling a UE to acquire any OSI that the scheduling entity may broadcast periodically or send on-demand. For example, the PBCH may carry a master information block (MIB). Here, the MIB may provide a UE with parameters for monitoring a control resource set (CORESET), such as a control resource set index value, configured to indicate to the UE a set of resources or a location on which the scheduling entity will be broadcasting the control resource set. In some examples, this control resource set index may signal a resource location corresponding to a downlink control channel (e.g., PDCCH), although a control resource set may be carried on any suitable channel. Here, a control resource set may convey to a UE with parameters identifying or indicating a location of what may be referred to as remaining minimum system information (RMSI) on a system information block type 1 (SIB1). In some examples, the SIB1 may be carried on a downlink shared data channel (PDSCH), although a SIB may be carried on any suitable channel. Once a UE obtains the MIB and SIB1, such a UE may possess the MSI for the corresponding cell.

OSI may include any SI that is not broadcast in the MSI. In some examples, the PDSCH may carry a plurality of SIBs, not limited to SIB1, discussed above. Here, the scheduling entity may provide the OSI in these SIBs, e.g., SIB2 and above.

When a network supports two or more categories of UEs, including reduced-capability UEs or other UE types, a procedure for initial acquisition of the network may be incompatible with one or more UE categories. For example, FIG. 7 is a flow chart illustrating a UE process of network acquisition, generally described above, in accordance with some aspects of the present disclosure. As described below, a particular implementation may omit some or all illustrated features, and may not require some illustrated features to implement all embodiments. In some examples, the scheduled entity 600 illustrated in FIG. 6 (e.g., a reduced-capability UE, a legacy UE, or any other suitable category UE) may be configured to carry out the process 700. In some examples, any suitable apparatus or means for carrying out the functions or algorithm described below may carry out the process 700.

At block 702, a UE may begin a network acquisition procedure by performing a cell search. For example, a UE may employ a raster (e.g., a frequency raster, a channel raster, and/or a synchronization raster) that defines a set or a sequence of bands and carrier frequencies that a UE may monitor or scan. The UE may include a transceiver 610 to search a designated set of frequency bands. Additionally or alternatively, for each carrier frequency, the UE may identify the strongest cell, measure certain cell attributes, and obtain the cell's associated SSB. In various examples, the UE may scan over a set of carrier frequencies in a certain order or sequence, taking advantage of stored information such as its connection history and/or configuration the UE may have received from a RAN. If and when the UE identifies a suitable cell (e.g., a cell that is not barred, and which has measured cell attributes that satisfy a given cell selection criteria), the UE may then camp on the cell to acquire a network connection.

At block 704, when the UE locates and receives the SSB, it may read or process information contained in the SSB. For example, a portion of the SSB (e.g., a PBCH) may include a master information block (MIB). The MIB may be an information packet or information element that includes parameters for a UE to employ for monitoring a control resource set. In some examples, such parameters may include a control resource set index value configured to indicate a set of resources or a location on which the RAN will be broadcasting the control resource set. This control resource set may be located on a control channel such as PDCCH, although it may be implemented on any suitable channel.

At block 706, when the UE receives the control resource set as indicated in the MIB, it may read information contained therein. For example, a portion of the control resource set (e.g., CORESET0) may include or point to a system information block (e.g., SIB1), carrying system information further to the system information provided in the MIB. Together, in some examples, the MIB and SIB1 may provide minimum system information (MSI) for UE network acquisition.

The capabilities of a given UE (e.g., corresponding to a UE category) can impact the UE's performance of the process of FIG. 7. For example, consider a reduced-capability UE category configured with a maximum bandwidth capability B. To accommodate UEs in this category, in some examples described herein, a RAN may configure the SSB and/or control resource set transmission with a bandwidth $C \leq B$. If the RAN configured the SSB/control resource set with a bandwidth $C > B,$ then a UE in that category may fail to perform an initial acquisition on that RAN.

In further examples described herein, a RAN may therefore configure the SSB and control resource set differently for different UEs categories, for example, based on the maximum bandwidth of different UE categories. However, if a given UE's maximum bandwidth capability affects the very first step of the initial acquisition procedure (e.g., block 702), a RAN may not have a way to determine a suitable UE-specific or UE category-specific bandwidth for the SSB and/or control resource set. Even if a UE has a mechanism for sending its capability information (e.g., its maximum supported bandwidth) to the RAN, such a capability signaling stage would occur after an initial acquisition procedure 700. Thus, this raises the question of how a RAN might take a UE's capability information into account when it configures the SSB and control resource set transmissions.

Various classes or categories of UEs may be deployed for communications using techniques discussed herein. In some aspects, the present disclosure provides examples of network deployments for enabling a scheduling entity to support legacy UEs, as well as various other (e.g., other than legacy) categories of UEs (e.g., including reduced-capability UEs), including those with a reduced bandwidth capability. In some disclosed examples, different categories of UEs (e.g., including but not limited to legacy UEs and reduced-capability UEs) may share the same SSB and control resource set for an initial acquisition procedure. In some further disclosed examples, a network may provide a different or separate SSB (e.g., a dedicated SSB) and/or control resource set for a subset of supported UE categories (e.g., for reduced-capability UEs). That is, a network may broadcast two or more SSB and/or control resource sets on two or more different corresponding sets of wireless resources (e.g., at different frequencies, at different times, and/or utilizing any other suitable multiplexing mechanism). Accordingly, this disclosure refers in some examples to SSB/control resource set sharing, where the SSB and control resource set are shared by two or more categories of UEs (e.g., legacy UEs and reduced-capability UEs); and to a separate SSB/control resource set, where a separate SSB and/or control resource set is provided for a subset of supported UE categories (e.g., for reduced-capability UEs).

In some of the examples disclosed herein, a network (e.g., a RAN) or scheduling entity may transmit a separate SSB and/or control resource set designated for a subset of supported UE categories (e.g., for reduced-capability UEs).

That is, a scheduling entity may transmit one or more SSBs and/or control resource sets that are separately or, in some examples, exclusively designated for one or more identified UE categories, such as reduced-capability UEs, while transmitting one or more other SSBs and/or control resource sets intended to be received by one or more other identified UE categories, such as legacy or other UEs. Using varied SSB types (e.g., same, separate, distinct, etc.) enables and provides flexibility in network design and operations considering device operational parameters.

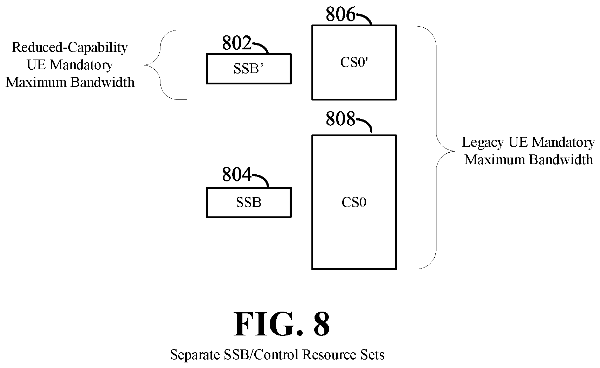

As one example, a scheduling entity may transmit a separate SSB designated for reduced-capability UEs. **FIG. 8** schematically illustrates one example of a separate SSB 802, labeled SSB', designated for or intended to be received by reduced-capability UEs. As further illustrated, the scheduling entity transmits a legacy SSB 804, labeled SSB, intended to be received by another UE category such as legacy UEs. In this example, the scheduling entity may employ any suitable technique to enable UEs in different categories to differentiate the separate SSB' 802 from the legacy SSB 804. That is, the scheduling entity may employ a signaling mechanism to instruct a given UE as to which SSB it should monitor. For example, the scheduling entity may include an information element within the SSB (e.g., 'extension' bit, or any suitable information element) that a UE can utilize to distinguish the reduced-capability-UE-separate SSB 802 from the legacy-UE SSB 804. In another example, the scheduling entity may deploy the different SSBs on different rasters, such that the corresponding UE category would not search the locations where the other SSB is located during an initial acquisition procedure. That is, a network may have a capability to support a given UE category (e.g., reduced-capability UEs) that is known to have a separate or different raster for its cell search, that differs from a raster employed by UEs of one or more other categories (e.g., legacy UEs). Thus, a scheduling entity may broadcast the separate SSB' 802 on frequencies that correspond to the separate or different raster utilized by reduced-capability UEs, and may broadcast the nominal raster utilized by legacy UEs.

Varied use of SSB transmissions may be utilized for deployment. For example, in the illustration provided in FIG. 8, the network additionally provides a separate control resource set 806 (labeled CS0') for reduced-capability UEs. This separate control resource set may be distinguished from a legacy control resource set 808 for legacy or other UEs. As shown, the bandwidth of the legacy control resource set 808 may be wider than the bandwidth of the separate control resource set 806. Accordingly, the mandatory maximum bandwidth of a reduced-capability UE receiving the separate SSB 802 and the separate control resource set 806 can be narrower than the mandatory maximum bandwidth of a legacy UE receiving the legacy SSB 804 and the legacy control resource set 808. In the illustration, the mandatory maximum bandwidth of the legacy UE is shown as being wide enough to receive both the separate control resource set 806 and the legacy control resource set 808. While this is an option, it is not a requirement. That is, in some examples, a mandatory maximum bandwidth for a given UE or UE category may correspond to any suitable parameter, including but not limited to an SSB and control resource set provided for that UE or UE category.

By deploying different, or separate SSBs and/or control resource sets for different UE categories in this manner, a network may further signal different sets of parameters for the different UE categories, in addition to or in the alternative to an information element for distinguishing the respective SSBs and/or control resource sets. For example, a reduced-capability UE may only require a small set of information in SIB 1, as other information carried on a legacy SIB1 may apply to capabilities or features outside of those supported by such reduced-capability UE. The network may accordingly reduce the size of the separate control resource set 806 for reduced-capability UEs, reducing signaling overhead.

Communication devices may be configured to support varied levels of communication capabilities. According to a further aspect of the present disclosure, the use of such a separate SSB and/or control resource set for reduced-capability UEs may be extended to cover a case where a network supports two or more different reduced-capability UE categories, such as a high-end category and a low-end category. For example, a high-end category of reduced-capability UE may support a relatively wider mandatory maximum bandwidth (e.g., 20 MHz), and a low-end category of reduced-capability UE may support a relatively narrower mandatory maximum bandwidth (e.g., 10 MHz).

As illustrated in **FIG. 9,** a network may support different reduced-capability UE types or categories. This support can be enabled by deploying, for example, separate SSBs 902 and 906, and separate control resource sets 904 and 908, corresponding to one or more different reduced-capability UE categories. For example, to support the high-end device category, the network can deploy a first SSB/control resource set 904/908, having a relatively wider bandwidth; and a second SSB/control resource set 902/906 having a relatively narrower bandwidth. In some examples, the first SSB/control resource set 904/908 may be shared by high-end reduced capability UEs and legacy UEs. However, this is not required, and those skilled in the art will recognize that these techniques may be modified such that another UE category (e.g., legacy UEs) may utilize any suitable SSB/control resource set, which may or may not correspond to those illustrated in FIG. 9.

Operational bandwidths may be sized and formatted considering varied UE categories. For example, the bandwidth to receive the first SSB/control resource set 904/908 may be 20MHz. In this example, during network acquisition a high-end reduced-capability UE may search for the first SSB 904 (which may, in some examples, be shared with legacy UEs).

Further, to support the low-end device category, the network can deploy a second (e.g., separate) SSB/control resource set 902/906, having a relatively narrower bandwidth. For example, the bandwidth to receive the second SSB/control resource set 902/906 may be 10MHz. Accordingly, during network acquisition a low-end, reduced-capability UE may search for the second SSB 902. The second SSB can be configured to be suitably discernible from the first (legacy) SSB 904. For example, as discussed above, one or both of the respective SSBs may include an 'extension' bit or other suitable information element carrying information to indicate whether the respective SSB is the second (separate) SSB 902 for the low-end reduced capability UE, or the first SSB 904 for the high-end reduced-capability UE.

In certain cases, a high-end reduced-capability UE may face challenging conditions such as operating at or near a cell edge. According to a further aspect of this disclosure, a high-end reduced-capability device operating according to the above example technique may optionally utilize the second (separate) SSB/control resource set 902/906. That is, although the second (separate) SSB/control resource set 902/906 is provided or designated for a low-end device category, a high-end reduced-capability device may utilize it. This is illustrated on the right-hand side of FIG. 9. That is, according to a further aspect of the disclosure, cross-usage of the second (separate) SSB/control resource set may be employed, such that the second (separate) SSB/control resource set 902/906 is not entirely dedicated only for low-end reduced-capability UEs, but may be utilized by high-end reduced-capability UEs, or even legacy UEs, if it might be beneficial.

In a still further example, for a low-end, reduced-capability device category, the network may provide the second control resource set 906, and/or the associated data channel transmissions (e.g. SIB1) 910. For example, these may be transmitted via increased repetition or redundancy to make up for losses in terms of the potential reduction in the number of antennas on such low-end reduced-capability UEs. Though FIG. 9 illustrates the SIB 910 and repetitions of the SIB 910 within the control resource set 906, but this is merely for ease of visual reference. That is, as discussed above, the control resource set 906 may provide information that identifies or indicates a separate resource (e.g., a PDSCH) that carries the SIB. By increasing the redundancy in the SIB transmission, it is easier for a UE to detect this transmission. That is, an initial network acquisition procedure may become more reliable. Accordingly, in some cases, the high-end reduced-capability device, which may be operating at the cell edge or otherwise in difficult channel conditions, may utilize the low-end reduced-capability device's separate control resource set 906, which it can more reliably receive.

FIG. 10 is a flow chart illustrating an exemplary process for network acquisition in accordance with some aspects of the present disclosure (e.g., corresponding to FIGs. 8/9). As described below, a particular implementation may omit some or all illustrated features, and may not require some illustrated features to implement all embodiments. FIG. 10 illustrates functional blocks or processes corresponding three exemplary nodes, each node having a separate, respective column. For example, a first column 1002 may correspond to scheduling entity 500 illustrated in FIG. 5; a second column 1004 may correspond to a scheduled entity 600 illustrated in FIG. 6; and a third column 1006 may correspond to another scheduled entity 600 illustrated in FIG. 6. In some examples, any suitable apparatus or means for carrying out the functions or algorithm described below may carry out the process illustrated in FIG. 10.

In the illustrated example, a scheduled entity or node corresponding to the second column 1004 is identified as a reduced-capability UE 1004, as described herein. And the scheduled entity or node corresponding to the third column 1006 is identified as a legacy UE 1006, as described herein. The reduced-capability UE 1004 may be considered as being categorized by a network to be in a first category, and accordingly, may be considered an element or member of a first set of one or more UEs (e.g., a reduced-capability category of UEs). The legacy UE 1006 may be considered as being categorized by a network to be in a second category, and accordingly, may be considered an element or member of a second set of one or more UEs (e.g., a legacy category of UEs). While the examples discussed below refer to a legacy UE 1006, it is to be understood that the processes and techniques discussed may be equivalently applied, or similarly applied to a high-end reduced-capability UE. That is, in another example, the first category UE 1004 may correspond to a low-end reduced-capability UE, and the second category UE 1006 may correspond to a high-end reduced-capability UE, as discussed above.

The discussion below, and the corresponding flow charts may, in some examples, describe operations that occur at their respective nodes in parallel, or simultaneously. Thus, for clarity of description, the discussion that follows generally tracks the operation in a sequential order. However, the disclosure is not limited to the specific disclosed sequence of operations.

At blocks 1041 and 1061, a reduced-capability UE 1004 and a legacy UE 1006 each performs a cell search procedure to attempt to locate and acquire a connection with a wireless network. For example, the respective UEs may receive waveforms or signals at selected carrier frequencies as set forth in a channel raster or channel list, stored in memory, seeking transmissions of SSBs or other suitable reference signals from nearby cells.

At block 1021, a scheduling entity 1002 transmits a first SSB; and at block 1022 the scheduling entity 1002 transmits a second SSB. Here, the first SSB may include suitable information indicating that the first SSB is designated for a first set of UEs. The second SSB may be distinguished or identified in like manner. The scheduling entity 1002 may employ any suitable mechanism to enable a UE receiving an SSB to determine that the SSB is designated for a selected category or set of UEs (e.g., designating the first SSB for a first UE category/set and designating the second SSB for a second UE category/set). For example, the scheduling entity 1002 may transmit an SSB on a carrier frequency designated for a selected category of UEs, such that a cell search performed by a UE of the selected category can locate the SSB transmission by being configured with a raster that includes the corresponding carrier frequency. In another example, the scheduling entity 1002 may employ an explicit signaling mechanism, such as including a corresponding information element within the SSB configured to identify the SSB as being designated for UEs of the selected category.

At block 1042, the reduced-capability UE 1004 may receive a first SSB. Here, the reduced-capability UE 1004 may identify the first SSB as being designated for a first category or set of UEs, a category or set of which the reduced-capability UE 1004 is a member. For example, the reduced-capability UE 1004 may assume that the first SSB is designated for UEs of the first category if the reduced-capability UE 1004 performed a cell search utilizing a raster suitably configured to search for SSBs on selected carrier frequencies designated for SSBs designated for UEs of the first category. In another example, the reduced-capability UE 1004 may read information included in the first SSB and determine that the first SSB is designated for UEs of the first category based on an indication contained within. When the reduced-capability UE 1004 suitably identifies the first SSB, the reduced-capability UE 1004 reads and obtains information for identifying and obtaining an identified control resource set (e.g., a first control resource set). In some examples, the information that identifies the first control resource set may include an index value, such as a control resource set index value that in some examples may be a 4-bit information element as described above.

At optional block 1062, the legacy UE 1006 may optionally receive the first SSB. Here, the legacy UE 1006 may identify the first SSB as being designated for a first category or set of UEs, a category or set of which the legacy UE 1006 is not a member. In an example where the scheduling entity 1002 utilizes a suitably configured channel raster to differentiate or identify SSBs for different UE categories or sets, the legacy UE 1006 may search other carrier frequencies, and may pass over or overlook the first SSB (thus the optional nature of block 1062). In an example where the scheduling entity 1002 utilizes explicit signaling in the SSB to differentiate or identify SSBs for different UE categories or sets, the legacy UE 1006 may identify such first SSB in substantially the same fashion as described above for the reduced-capability UE 1004. When the legacy UE 1006 suitably identifies the first SSB, the legacy UE 1006 may forgo reading and obtaining information such as a MIB that may be contained within.

At optional block 1043, the reduced-capability UE 1004 may optionally receive the second SSB. Here, the reduced-capability UE 1004 may identify the second SSB as being designated for a second category or set of UEs, a category or set of which the reduced-capability UE 1004 is not a member. In an example where the scheduling entity 1002 utilizes a suitably configured channel raster to differentiate or identify SSBs for different UE categories or sets, the reduced-capability UE 1004 may search other carrier frequencies, and may pass over or overlook the second SSB (thus the optional nature of block 1043). In an example where the scheduling entity 1002 utilizes explicit signaling in the SSB to differentiate or identify SSBs for different UE categories or sets, the legacy UE 1006 may identify such second SSB in substantially the same fashion as described above for the legacy UE 1006 in connection with the first SSB. When the reduced-capability UE 1004 suitably identifies the second SSB, the reduced-capability UE 1004 may forgo reading and obtaining information such as a MIB that may be contained within.

At block 1063, the legacy UE 1006 may receive a second SSB. Here, the legacy UE 1006 may identify the second SSB as being designated for a second category or set of UEs, a category or set of which the legacy UE 1006 is a member. For example, the legacy UE 1006 may assume that the second SSB is designated for UEs of the second category if the legacy UE 1006 performed a cell search utilizing a raster suitably configured to search for SSBs on selected carrier frequencies designated for SSBs designated for UEs of the second category. In another example, the legacy UE 1006 may read information included in the second SSB and determine that the second SSB is designated for UEs of the second category based on an indication contained within. When the legacy UE 1006 suitably identifies the second SSB, the legacy UE 1006 reads and obtains information for identifying and obtaining an identified control resource set (e.g., a second control resource set). In some examples, the information that identifies the first control resource set may include an index value, such as a control resource set index value that in some examples may be a 4-bit information element as described above.

At block 1023, the scheduling entity 1002 may configure a first bandwidth for a first control resource set according to a presumed bandwidth capability of the first category or set of UEs; and at block 1024, the scheduling entity 1002 may configure a second bandwidth for a second control resource set according to a presumed bandwidth capability of the second category or set of UEs. For example, the scheduling entity 1002 may establish a presumed bandwidth capability by obtaining or determining information relating to bandwidth capabilities of UEs in given categories in a variety of ways, including directing (or following as specified) bandwidth capability requirements that may also be known by the various UEs. Configuring the bandwidth to employ for a control resource set may include, for example, scheduling transmission of a control resource set on a set of resources corresponding to the bandwidth. According to some examples, the respective first and second bandwidths may take the same value or may take values that differ from one another. In one example, the first bandwidth for the first category of UEs may be relatively narrower than the second bandwidth for the second category of UEs. That is, a first category or set of UEs may include reduced-capability UEs that benefit from a narrower bandwidth control resource set.

At optional block 1025, the scheduling entity 1002 may optionally configure the first control resource set to provide supplementary redundancy for a system information block. That is, in some examples, the first control resource set may include, at least in part, information that represents a system information block such as SIB1. According to an aspect of this disclosure, the scheduling entity 1002 may configure the control resource set to improve the reliability of the transmission of the SIB. For example, the scheduling entity 1002 may schedule a control resource set such that information representing a system information block may be repeated two or more times, to provide supplementary redundancy for the SIB. In another example, the scheduling entity 1002 may employ a suitable channel coding mechanism for encoding at least a portion of the information in the control resource set. In general, such channel coding has a given code rate, where a higher code rate represents increased redundancy in the encoded output of the channel coder, and a lower code rate represents reduced redundancy in the encoded output. Thus, in some examples, the scheduling entity 1002 may employ a higher code rate for encoding a SIB than the scheduling entity 1002 employs for other information in the control resource set, and/or for other control resource set transmissions. In this way, the encoded SIB may exhibit supplementary redundancy.

At block 1026, the scheduling entity 1002 may transmit a first control resource set over the first bandwidth; and at block 1027, the scheduling entity 1002 may transmit a second control resource set over the second bandwidth. The respective transmissions may employ the respectively configured bandwidths as described above.

At block 1044, the reduced-capability UE 1004 may receive the first control resource set and obtain system information, e.g., carried in a SIB. For example, the reduced-capability UE 1004 may monitor wireless resources based on information in the first SSB, described above. When the scheduling entity 1002 transmits a control resource set over those resources, the reduced-capability UE 1004 may receive and read the information contained within.

At optional block 1064, the legacy UE 1006 may optionally receive the first control resource set and obtain system information, e.g., carried in a SIB. For example, as described above, in some examples a legacy UE 1006 may be operating at a cell edge or otherwise in difficult channel conditions. In such a case, the legacy UE 1006 may have some trouble reliably receiving and decoding its designated control resource set. Accordingly, in some examples, a legacy UE 1006 may monitor the first bandwidth, designated for a different UE category (e.g., a reduced-capability UE category). In an example where the first control resource set or the first SIB contained therein is configured with supplementary redundancy, as described above, the legacy UE 1006 may have more success receiving the reduced-capability UE's control resource set, which may be beneficial to or usable by the legacy UE 1006. However, in some examples, the legacy UE 1006 may forgo to receive the first control resource set.

At block 1065, the legacy UE 1006 may receive the second control resource set and obtain system information, e.g., carried in a SIB. For example, the legacy UE 1006 may monitor wireless resources based on information in the second SSB, described above. When the scheduling entity 1002 transmits a control resource set over those resources, the legacy UE 1006 may receive and read the information contained within.

As another example, a network may transmit a shared SSB, or an SSB for reception by UEs in two or more different categories (e.g., shared both by the reduced-capability UEs and the legacy UEs). Here, the network may transmit a separate control resource set for a given category (e.g., reduced-capability) UEs, other than a legacy control resource set intended to be received by legacy or other UE categories. FIG. 11 illustrates one example SSB/control resource set configuration according to this technique. In this example, both reduced-capability UEs and legacy UEs may perform a cell search procedure, and receive the same SSB 1122. Here, the network may employ suitable signaling within the SSB 1122 to instruct a reduced-capability UE to read a separate control resource set (and a corresponding SIB 1) 1126, which may have a reduced bandwidth relative to a legacy control resource set 1128. Such SSB signaling may be implemented in a manner to be backward-compatible with legacy UEs. For example, by utilizing a 'reserved' or otherwise unused bit in the SSB 1122, a legacy UE may ignore that information element, as its information is unspecified according to the configuration of such legacy UEs. However, a reduced-capability UE may read the corresponding information element to determine suitable parameters to monitor for separate control resource set 1126.

**FIG. 12** is a flow chart illustrating an exemplary process for network acquisition in accordance with some aspects of the present disclosure (e.g., corresponding to FIG. 11). As described below, a particular implementation may omit some or all illustrated features, and may not require some illustrated features to implement all embodiments. As with FIG. 10, the flow chart illustrated in FIG. 12 illustrates functional blocks or processes corresponding to three exemplary nodes: a scheduling entity 1202 (e.g., corresponding to the scheduling entity 500 illustrated in FIG. 5), a reduced-capability UE 1204 (e.g., corresponding to the scheduled entity 600 illustrated in FIG. 6), and a legacy UE 1206 (e.g., corresponding to the scheduled entity 600 illustrated in FIG. 6). Again, as with FIG. 10, in various examples the reduced-capability UE 1204 and the legacy UE 1206 may be substituted with a low-end reduced capability UE 1204 and a high-end reduced-capability UE 1206 by a person of ordinary skill in the art. In some examples, any suitable apparatus or means for carrying out the functions or algorithm described below may carry out the process illustrated in FIG. 12.

At blocks 1241 and 1261, a reduced-capability UE 1204 and a legacy UE 1206 each performs a cell search procedure to attempt to locate and acquire a connection with a cellular network. For example, the respective UEs may receive waveforms or signals at selected carrier frequencies as set forth in a channel raster or channel list, stored in memory, seeking transmissions of SSBs or other suitable reference signals from nearby cells.

At block 1221, a scheduling entity 1202 transmits an SSB. Here, the SSB may include suitable information indicating that the SSB is designated for one or more sets or categories of UEs, although in some examples, the SSB may omit such designation. The SSB includes information for identification of a first control resource set for a first set or category of one or more UEs (e.g., reduced-capability UEs) and information for identification of a second control resource set for a second set or category of one or more UEs (e.g., legacy UEs).

At block 1242, the reduced-capability UE 1204 may receive the SSB. Here, the reduced-capability UE 1204 may read and obtain information for identifying and obtaining an identified control resource set (e.g., a first control resource set). Here, the information indicating or identifying the first control resource set may be distinguished from one or more other control resource sets that may be included within the SSB, utilizing any suitable implicit or explicit technique, such as utilizing a reserved or otherwise unused bit in the SSB, as described above. In some examples, the information that indicates or identifies the first control resource set may include an index value, such as a control resource set index value that in some examples may be a 4-bit information element as described above.

At block 1262, the legacy UE 1206 may receive the SSB. Here, the legacy UE 1206 may read and obtain information for identifying and obtaining an identified control resource set (e.g., a second control resource set). Here, the information indicating or identifying the second control resource set may be distinguished from one or more other control resource sets that may be included within the SSB, in the same or similar fashion as described above for the reduced-capability UE 1204. In some examples, the information that indicates or identifies the first control resource set may include an index value, such as a control resource set index value that in some examples may be a 4-bit information element as described above.

At block 1222, the scheduling entity 1202 may configure a first bandwidth for a first control resource set according to a presumed bandwidth capability of the first category or set of UEs; and at block 1223, the scheduling entity 1202 may configure a second bandwidth for a second control resource set according to a presumed bandwidth capability of the second category or set of UEs. For example, the scheduling entity 1202 may establish a presumed bandwidth capability by obtaining or determining information relating to bandwidth capabilities of UEs in given categories in a variety of ways, including directing (or following as specified) bandwidth capability requirements that may also be known by the various UEs. Configuring the bandwidth to employ for a control resource set may include, for example, scheduling transmission of a control resource set on a set of resources corresponding to the bandwidth. According to some examples, the respective first and second bandwidths may take the same value or may take values that differ from one another. In one example, the first bandwidth for the first category of UEs may be relatively narrower than the second bandwidth for the second category of UEs. That is, a first category or set of UEs may include reduced-capability UEs that benefit from a narrower bandwidth control resource set.

At optional block 1224, the scheduling entity 1202 may optionally configure the first control resource set to provide supplementary redundancy for a system information block. That is, in some examples, the first control resource set may include, at least in part, information that represents a system information block such as SIB1. According to an aspect of this disclosure, the scheduling entity 1202 may configure the control resource set to improve the reliability of the transmission of the SIB. For example, the scheduling entity 1202 may schedule a control resource set such that information representing a system information block may be repeated two or more times, to provide supplementary redundancy for the SIB. In another example, the scheduling entity 1202 may employ a suitable code rate at channel coding to provide for supplementary redundancy, as described above.

At block 1225, the scheduling entity 1202 transmits a first control resource set over the first bandwidth; and at block 1226, the scheduling entity 1202 transmits a second control resource set over the second bandwidth. The respective transmissions may employ the respectively configured bandwidths as described above.

At block 1243, the reduced-capability UE 1204 may receive the first control resource set and obtain system information, e.g., carried in a SIB. For example, the reduced-capability UE 1204 may monitor wireless resources based on information in the SSB, described above. When the scheduling entity 1202 transmits a control resource set over those resources, the reduced-capability UE 1204 may receive and read the information contained within.

At optional block 1263, the legacy UE 1206 may optionally receive the first control resource set and obtain system information, e.g., carried in a SIB. For example, as described above, in some examples a legacy UE 1206 may be operating at a cell edge or otherwise in difficult channel conditions. In such a case, the legacy UE 1206 may have some trouble reliably receiving and decoding its designated control resource set. Accordingly, in some examples, a legacy UE 1206 may monitor the first bandwidth, designated for a different UE category (e.g., a reduced-capability UE category). In an example where the first control resource set or the first SIB contained therein is configured with supplementary redundancy, as described above, the legacy UE 1206 may have more success receiving the reduced-capability UE's control resource set, which may be beneficial to or usable by the legacy UE 1206. However, in some examples, the legacy UE 1206 may forgo to receive the first control resource set.

At block 1264, the legacy UE 1206 may receive the second control resource set and obtain system information, e.g., carried in a SIB. For example, the legacy UE 1206 may monitor wireless resources based on information in the SSB, described above. When the scheduling entity 1202 transmits a control resource set over those resources, the legacy UE 1206 may receive and read the information contained within.

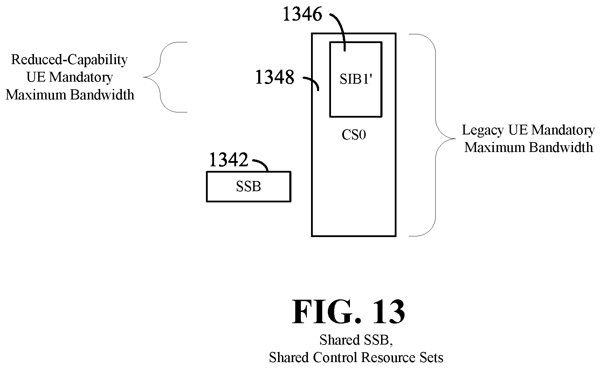

As still another example, as illustrated in **FIG. 13,** both the SSB 1342 and the control resource set 1348 may be shared between two or more UE categories (e.g., by both reduced-capability UEs and legacy and other UEs), but a split between the two may occur at the SIB1 level. That is, as discussed above, a control resource set 1348 may include information indicating a location of the SIB1 within the PDSCH. Accordingly, a network may include (e.g., within the SSB 1342) a special allocation for the SIB1 1346 intended for a given category (e.g., reduced-capability) UEs, this special allocation being carried in the shared control resource set 1348 but configured so as to be ignored by legacy or other UE categories. In this way, reduced-capability UEs may receive a different SIB 1 1346 than that received by legacy or other UEs.

**FIG. 14** is a flow chart illustrating an exemplary process for network acquisition in accordance with some aspects of the present disclosure (e.g., corresponding to FIG. 13). As described below, a particular implementation may omit some or all illustrated features, and may not require some illustrated features to implement all embodiments. As with FIG. 10, the flow chart illustrated in FIG. 14 illustrates functional blocks or processes corresponding to three exemplary nodes: a scheduling entity 1402 (e.g., corresponding to the scheduling entity 500 illustrated in FIG. 5), a reduced-capability UE 1404 (e.g., corresponding to the scheduled entity 600 illustrated in FIG. 6), and a legacy UE 1406 (e.g., corresponding to the scheduled entity 600 illustrated in FIG. 6). Again, as with FIG. 10, in various examples the reduced-capability UE 1404 and the legacy UE 1406 may be substituted with a low-end reduced capability UE 1404 and a high-end reduced-capability UE 1406 by a person of ordinary skill in the art. In some examples, any suitable apparatus or means for carrying out the functions or algorithm described below may carry out the process illustrated in FIG. 14.

At blocks 1441 and 1461, a reduced-capability UE 1404 and a legacy UE 1406 each performs a cell search procedure to attempt to locate and acquire a connection with a cellular network. For example, the respective UEs may receive waveforms or signals at selected carrier frequencies as set forth in a channel raster or channel list, stored in memory, seeking transmissions of SSBs or other suitable reference signals from nearby cells.

At block 1421, a scheduling entity 1402 transmits an SSB. Here, the SSB may include suitable information indicating that the SSB is designated for one or more sets or categories of UEs, although in some examples, the SSB may omit such designation. The SSB may include information for identification of a shared control resource set. That is, the identified control resource set may be designated for two or more sets or categories of UEs, and may include two or more corresponding SIBs. Here, the SSB may include information for identification of a first SIB for a first set or category of one or more UEs (e.g., reduced-capability UEs) within the shared control resource set, and information for identification of a second SIB for a second set or category of one or more UEs (e.g., legacy UEs) within the shared control resource set.

At block 1442, the reduced-capability UE 1404 may receive the SSB. Here, the reduced-capability UE 1404 may read and obtain information for identifying and obtaining an identified control resource set (e.g., a shared control resource set). In some examples, the information that indicates or identifies the control resource set may include an index value, such as a control resource set index value that in some examples may be a 4-bit information element as described above. Further, the reduced capability UE 1404 may read and obtain information for identifying and obtaining an identified SIB (e.g., a first SIB designated for a first UE category or set, such as reduced-capability UEs) in the shared control resource set.

At block 1462, the legacy UE 1406 may receive the SSB. Here, the legacy UE 1406 may read and obtain information for identifying and obtaining an identified control resource set (e.g., a shared control resource set). In some examples, the information that indicates or identifies the control resource set may include an index value, such as a control resource set index value that in some examples may be a 4-bit information element as described above. Further, the legacy UE 1406 may read and obtain information for identifying and obtaining an identified SIB (e.g., a second SIB designated for a second UE category or set, such as legacy UEs) in the shared control resource set.

At block 1422, the scheduling entity 1402 may configure a shared control resource set to include a first SIB and a second SIB. Here, the scheduling entity 1402 may configure a bandwidth of the first SIB according to a presumed bandwidth of a first set of UEs (e.g., reduced-capability UEs). The bandwidth of the first SIB may in some examples be less than (or narrower than) a bandwidth of the full shared control resource set. That is, to accommodate operation with reduced-capability UEs, the shared control resource set may be configured such that such reduced-capability UE can acquire a network connection by receiving only a subset of the shared control resource set, corresponding to the bandwidth of the first SIB within that shared control resource set. At block 1423, the scheduling entity 1402 may configure a second bandwidth for a second system information block in the shared control resource set according to a presumed bandwidth capability of the second category or set of UEs. For example, the scheduling entity 1402 may establish a presumed bandwidth capability by obtaining or determining information relating to bandwidth capabilities of UEs in given categories in a variety of ways, including directing (or following as specified) bandwidth capability requirements that may also be known by the various UEs. Configuring the bandwidth to employ a shared control resource set may include, for example, scheduling transmission of two or more SIBs, having different respective bandwidths, on portions of the shared control resource set. According to some examples, the respective first and second bandwidths may take the same value or may take values that differ from one another. In one example, the first bandwidth for the first category of UEs may be relatively narrower than the second bandwidth for the second category of UEs. That is, a first category or set of UEs may include reduced-capability UEs that benefit from a narrower bandwidth SIB.

At optional block 1424, the scheduling entity 1402 may optionally configure the control resource set to provide supplementary redundancy for the first SIB. That is, in some examples, the scheduling entity 1402 may configure the control resource set to improve the reliability of the transmission of the first SIB. For example, the scheduling entity 1402 may schedule a shared control resource set such that information representing a first system information block may be repeated two or more times, to provide supplementary redundancy for the first SIB. In another example, the scheduling entity 1402 may employ a suitable code rate at channel coding to provide for supplementary redundancy, as described above.

At block 1425, the scheduling entity 1402 transmits the shared control resource set including a first SIB having a first bandwidth, and including a second SIB having a second bandwidth, wider than the first bandwidth. The respective SIBs may employ the respectively configured bandwidths as described above.

At block 1443, the reduced-capability UE 1404 may receive the shared control resource set and obtain system information, e.g., carried in a first SIB. For example, the reduced-capability UE 1404 may monitor wireless resources based on information in the SSB, described above. When the scheduling entity 1402 transmits a control resource set over those resources, the reduced-capability UE 1404 may receive and read the information contained within. Here, as described above, the reduced-capability UE 1404 may receive a portion of the full control resource set, corresponding to the first SIB.

At optional block 1463, the legacy UE 1406 may optionally receive the shared control resource set and obtain system information, e.g., carried in the first SIB. For example, as described above, in some examples a legacy UE 1406 may be operating at a cell edge or otherwise in difficult channel conditions. In such a case, the legacy UE 1406 may have some trouble reliably receiving and decoding its designated control resource set. Accordingly, in some examples, when a legacy UE 1406 receives a shared control resource set, the legacy UE 1406 may read and obtain the first SIB, carried on the first bandwidth, designated for a different UE category (e.g., a reduced-capability UE category). In an example where the first SIB is configured with supplementary redundancy, as described above, the legacy UE 1406 may have more success receiving the reduced-capability UE's SIB, which may be beneficial to or usable by the legacy UE 1406. However, in some examples, the legacy UE 1406 may forgo to read and utilize the first SIB.

At block 1464, the legacy UE 1406 may receive the shared control resource set and obtain system information, e.g., carried in a second SIB. For example, the legacy UE 1406 may monitor wireless resources based on information in the SSB, described above. When the scheduling entity 1402 transmits a control resource set over those resources, the legacy UE 1406 may receive and read the information contained within. Here, as described above, the legacy UE 1406 may receive the full control resource set. Although in some examples, the legacy UE 1406 may receive a portion of the full control resource set, similar to the reduced-capability UE 1404, if the legacy UE 1406 corresponds to a high-end reduced-capability UE or other UE category having a maximum bandwidth capability that may fall short of a full bandwidth of a control resource set. In any case, after receiving the control resource set, the legacy UE 1406 may read and obtain the second SIB carried in the shared control resource set, as indicated in the SSB.

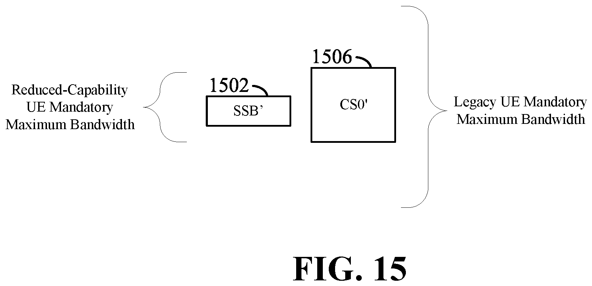

In a further example, two or more UE categories (e.g., both reduced-capability and legacy UEs) may share a full SSB/control resource set. FIG. 15 illustrates an example of a shared SSB 1502 and control resource set 1506. In this example, due to the possible limitations of reduced-capability devices, certain considerations in the configuration of the SSB/control resource set may be employed. For example, as seen FIG. 15, the bandwidth of the SSB/control resource set transmissions 1502/1506 may be constrained to the mandatory maximum bandwidth of all the supported UE categories, including a reduced-capability UE, and any wider bandwidth capability of a legacy UE may not be taken advantage of.

To illustrate this impact, **FIG. 16** is a flow chart illustrating an exemplary process for network acquisition in accordance with some aspects of the present disclosure (e.g., corresponding to FIG. 15). As described below, a particular implementation may omit some or all illustrated features, and may not require some illustrated features to implement all embodiments. As with FIG. 10, the flow chart illustrated in FIG. 16 illustrates functional blocks or processes corresponding to three exemplary nodes: a scheduling entity 1602 (e.g., corresponding to the scheduling entity 500 illustrated in FIG. 5), a reduced-capability UE 1604 (e.g., corresponding to the scheduled entity 600 illustrated in FIG. 6), and a legacy UE 1606 (e.g., corresponding to the scheduled entity 600 illustrated in FIG. 6). Again, as with FIG. 10, in various examples the reduced-capability UE 1604 and the legacy UE 1606 may be substituted with a low-end reduced capability UE 1604 and a high-end reduced-capability UE 1606 by a person of ordinary skill in the art. In some examples, any suitable apparatus or means for carrying out the functions or algorithm described below may carry out the process illustrated in FIG. 16.

At blocks 1641 and 1661, a reduced-capability UE 1604 and a legacy UE 1606 each performs a cell search procedure to attempt to locate and acquire a connection with a cellular network. For example, the respective UEs may receive waveforms or signals at selected carrier frequencies as set forth in a channel raster or channel list, stored in memory, seeking transmissions of SSBs or other suitable reference signals from nearby cells.

At block 1621, a scheduling entity 1602 transmits an SSB configured to be shared by at least two categories or sets of one or more UEs. Here, the SSB may include information for identification of a shared control resource set. In some examples, the information that indicates or identifies the control resource set may include an index value, such as a control resource set index value that in some examples may be a 4-bit information element as described above.

At block 1642, the reduced-capability UE 1604 may receive the SSB; and at block 1662, the legacy UE 1606 may receive the SSB. Here, the respective UEs 1604/1606 may read and obtain information for identifying and obtaining an identified control resource set (e.g., a shared control resource set).

At block 1622, the scheduling entity 1602 configures a shared control resource set. Here, the scheduling entity 1602 configures a bandwidth of the shared control resource set according to a presumed bandwidth of a first set of one or more UEs (e.g., reduced-capability UEs). That is, to accommodate operation with reduced-capability UEs, the shared control resource set is configured such that such reduced-capability UE can acquire a network connection by receiving the shared control resource set. Thus, as described above, legacy UEs or other higher-capability UEs may be constrained to receive a relatively narrow bandwidth control resource set to accommodate network sharing with UEs of the reduced-capability category or set.

At block 1623, the scheduling entity 1602 transmits the shared control resource set, including system information (e.g., a SIB). The shared control resource set employ the configured bandwidth as described above.

At block 1643, the reduced-capability UE 1604 may receive the shared control resource set and obtain system information, e.g., carried in a SIB; and at block 1663, the legacy UE 1606 may receive the shared control resource set and obtain system information, e.g., carried in a SIB. For example, the UEs 1604/1606 may monitor wireless resources based on information in the SSB, described above. When the scheduling entity 1602 transmits a control resource set over those resources, the UEs 1604/1606 may receive and read the information contained within.

Because this technique can constrain a legacy UE or other relatively higher-bandwidth capability UE to a narrow bandwidth control resource set, a further aspect of the present disclosure provides for a procedure to accommodate reduced-capability UEs without affecting the bandwidth of a control resource set provided for legacy UEs.

Table 1 below is a reproduction of Table 13-8 from 3GPP TS 38.213, Ver. 16.5, Section 13. This table shows certain parameters pertaining to a control resource set (CORESET) transmission that a network may employ according to 5G NR specifications.

**Table 1**

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 4 |
| 2 | 1 | 48 | 1 | 14 |
| 3 | 1 | 48 | 2 | 14 |
| 4 | 3 | 24 | 2 | -20 if $k_{SSB} = 0$; -21 if $k_{SSB} > 0$ |
| 5 | 3 | 24 | 2 | 24 |
| 6 | 3 | 48 | 2 | -20 if $k_{SSB} = 0$; -21 if $k_{SSB} > 0$ |
| 7 | 3 | 48 | 2 | 48 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

In this table, the first column (Index) shows a control resource set index value. According to some examples, a scheduling entity can provide this core resource set index value to a UE as a 4-bit field carried in an SSB transmission. In this way, the scheduling entity can indicate a multiplexing pattern or multiplexing mode for the control resource set, which is shown in the second column (SS/PBCH block and CORESET multiplexing pattern). For example, if the index value is 0, 1, 2, or 3, the SSB/control resource set multiplexing pattern is defined as mode 1. In mode 1, the SSB and control resource set are time division multiplexed (TDM), being transmitted in the same bandwidth but having the control resource set sent later than the SSB in time.

The third column of Table 1 provides the bandwidth of the control resource set in terms of a number of RBs (see above in connection with the description of FIG. 3). When a network utilizes multiplexing mode 1 (again, such that the control resource set is sent in the same bandwidth as the SSB but later in time), if a UE can support the control resource set bandwidth, then because the SSB is narrower in bandwidth than the control resource set, then that UE can support both the SSB and control resource set. Thus, with this multiplexing pattern a UE need only to consider the bandwidth of the control resource set, and if supported, then it can be assumed that the UE also supports the bandwidth of the SSB.

When a network utilizes multiplexing patterns 2 or 3, the SSB and control resource set are frequency division multiplexed (FDM), being transmitted at the same time, and separated from one another in frequency by some configured offset (see the fifth column of Table 1). With this configuration, if a particular UE (e.g., a reduced-capability UE) has a maximum supported bandwidth that matches the bandwidth of the control resource set, then that UE cannot receive this configuration. That is, with the FDM pattern, the scheduling entity transmits the SSB at a frequency outside the UE's bandwidth capability. This could potentially limit the network compatibility with reduced-capability UEs that support a relatively narrow maximum bandwidth, that is, too narrow to receive both the FDM SSB and control resource set.

When sharing an SSB/control resource set between reduced-capability UEs and legacy UEs, one option for a network is to establish that the mandatory maximum bandwidth of any UE that can operate on that network must be large enough to cover all possible configurations of the SSB/control resource set. Therefore, according to an aspect of the present disclosure, a network may implement one or more rules for the SSB/control resource set configuration when it shares the SSB/control resource set across two or more UE categories. For example, one rule that a network may utilize is that it may operate under a constraint or rule, such that for an SSB/control resource set configuration the network is disallowed to employ an SSB/control resource set multiplexing pattern that has a combined bandwidth larger than the mandatory maximum bandwidth of the supported UE categories. That is, the network may have a rule wherein the mandatory maximum bandwidth of all supported UE categories ≥ the maximum SSB/control resource set bandwidth in the multiplexing pattern(s) that will be utilized. However, with certain reduced-capability UEs, which may have a relatively narrow maximum bandwidth, such a constraint can substantially reduce the set of information that the network can provide to legacy UEs in the SSB/control resource set messages, as seen above in relation to FIGs. 15 and 16.

Therefore, according to another aspect of this disclosure, a network may define a rule or employ a technique where a reduced-capability UE may apply a different interpretation or translation of a control resource set index value provided in the SSB (e.g., as in Table 1, above), or of the contents of one or more other fields associated with the control resource set index value, that differs from a nominal interpretation or translation, such as the one provided in Table 1, above. That is, while a legacy UE, being configured to specifications, would generally interpret or translate a core resource set index value as specified, a UE according to some aspects of this disclosure (e.g., a reduced-capability UE) may differently interpret or translate the same core resource set index value to correspond to a different SSB/control resource set multiplexing pattern, other than an expected or standard value.

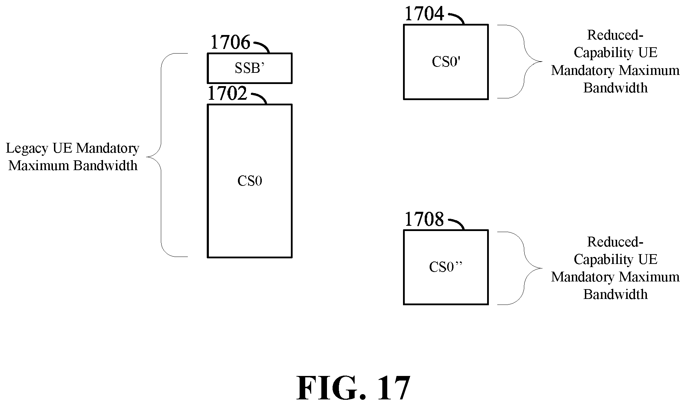

For example, a scheduling entity may transmit a first control resource set 1702 for legacy UEs or other UE categories, and may transmit a different, separate control resource set 1704, labeled CS0O' in FIG. 17, for use by such reduced-capability UEs. Here, the reduced-capability UE may read the same control resource set index value included in the SSB 1706. Here, however the reduced-capability UE may interpret or translate this index value as having a different meaning than the one set forth in Table 1 above, and may locate the separate control resource set 1704 based on this reinterpretation or separate translation. In still another example, a reduced-capability UE may utilize any other suitable information element, carried in an SSB 1706 or otherwise, to trigger its reinterpretation or separate translation of the multiplexing mode, as described below.

For example, a network may transmit an SSB 1706 that includes information indicating a control resource set index value of 4, indicating to legacy UEs (as seen in Table 1) that the SSB/control resource set multiplexing pattern is operating in mode 3. That is, such a UE will interpret the control resource set index as indicating that the SSB 1706 and the control resource set 1702 will be laid out in an FDM fashion as illustrated in FIG. 17, with a configured offset of 20 or 21 RBs (for example). However, a reduced-capability UE may reinterpret this same control resource set index value of 4, such that the reduced-capability UE monitors for a different control resource set 1704, offset from the SSB 1706 in time, rather than being FDM with the SSB 1706 (like the first control resource set 1702). For example, the network may transmit a separate control resource set 1704 that is TDM with the SSB 1706 (e.g., transmitted at a different time than, but within the same bandwidth as the SSB 1706), as illustrated in FIG. 17. In this way, a reduced-capability UE having a mandatory maximum bandwidth as wide as the separate control resource set 1704, but narrower than the first control resource set 1702, can suitably receive a full SSB/control resource set 1706/1704.

According to a still further aspect of this disclosure, when a reduced-capability UE utilizes this reinterpretation rule, it may not be necessary for a scheduling entity to transmit a control resource set in the same bandwidth as that of the SSB 1706. That is, if the reduced-capability UE supports RF retuning, then a scheduling entity may transmit a third control resource set 1708 (labeled CS0''), which may be offset from the SSB 1706 transmission in time, and also offset in frequency, as illustrated in FIG. 17. In this way, a reduced-capability UE may have a relatively narrow mandatory maximum bandwidth and still be capable of operating on a given network.

While such an index reinterpretation rule may provide greater operability with different types of reduced-capability UEs, it may imply that a scheduling entity will transmit the separate control resource set or sets 1704/1708 for the reduced-capability UEs. However, if such a reduced-capability UE attempts to acquire a connection with a legacy base station configured according to conventional specifications that do not include such a reinterpretation possibility, the reduced-capability UEs may waste power by applying the reinterpretation and looking for a separate control resource set 1704/1708 that does not exist.

Furthermore, when a UE receives a control resource set as part of its initial acquisition procedure, the UE generally tunes its receiver/transceiver to an appropriate carrier frequency or bandwidth to receive that control resource set. Thus, the bandwidth in which the control resource set is carried may be referred to as an initial bandwidth. Once such a UE is configured with an initial bandwidth, the UE may generally utilize that initial bandwidth for transmissions to the network (e.g., a random access procedure or other channel access procedure). However, with SSB/control resource set sharing as described herein, a scheduling entity may cause a potentially large number of UEs to tune to receive the same control resource set. In such a case, it may occur that a large number of UEs may congregate, continuing to operate in the same bandwidth (i.e., the initial bandwidth). This can result in network capacity problems if a large number of such UEs attempt to utilize this same bandwidth for transmissions, e.g., for a random access channel (RACH) transmission. Accordingly, in a further aspect of this disclosure, the network can reconfigure the initial bandwidth to move different sets of reduced-capability UEs into different bandwidths, to reduce such a congregation effect.

**FIG. 18** is a flow chart illustrating an exemplary process for network acquisition in accordance with some aspects of the present disclosure (e.g., corresponding to FIG. 17). As described below, a particular implementation may omit some or all illustrated features, and may not require some illustrated features to implement all embodiments. As with FIG. 10, the flow chart illustrated in FIG. 18 illustrates functional blocks or processes corresponding to three exemplary nodes: a scheduling entity 1802 (e.g., corresponding to the scheduling entity 500 illustrated in FIG. 5), a reduced-capability UE 1804 (e.g., corresponding to the scheduled entity 600 illustrated in FIG. 6), and a legacy UE 1806 (e.g., corresponding to the scheduled entity 600 illustrated in FIG. 6). Again, as with FIG. 10, in various examples the reduced-capability UE 1804 and the legacy UE 1806 may be substituted with a low-end reduced capability UE 1804 and a high-end reduced-capability UE 1806 by a person of ordinary skill in the art. In some examples, any suitable apparatus or means for carrying out the functions or algorithm described below may carry out the process illustrated in FIG. 18.

At blocks 1841 and 1861, a reduced-capability UE 1804 and a legacy UE 1806 each performs a cell search procedure to attempt to locate and acquire a connection with a cellular network. For example, the respective UEs may receive waveforms or signals at selected carrier frequencies as set forth in a channel raster or channel list, stored in memory, seeking transmissions of SSBs or other suitable reference signals from nearby cells.

At block 1821, a scheduling entity 1802 transmits an SSB configured to be shared by at least two categories or sets of one or more UEs. Here, the SSB may include information for identification of a control resource set. In some examples, the information that indicates or identifies the control resource set may include an index value, such as a control resource set index value that in some examples may be a 4-bit information element as described above. And as further discussed above, the scheduling entity 102 may plan for any suitable number of two or more different or separate translations of the information used for identification of a control resource set. In still further examples (e.g., see blocks 1824/1825 below), the scheduling entity may optionally include a translation information element, or a translation modification information element, providing instructions or parameters for UEs of a given category to apply to translate the information to identify the control resource set.

At block 1842, the reduced-capability UE 1804 may receive the SSB. Here, the reduced-capability UE 1804 may read and obtain information for identifying and obtaining an identified control resource set (e.g., a first control resource set). According to an aspect of this disclosure, the reduced-capability UE 1804 may apply a first translation or interpretation rule to the control resource set index, with which the reduced-capability UE 1804 may identify and obtain a first control resource set.

At block 1862, the legacy UE 1806 may receive the SSB. Here, the legacy UE 1806 may read and obtain information for identifying and obtaining an identified control resource set (e.g., a second control resource set). According to an aspect of this disclosure, the legacy UE 1806 may apply a second translation or interpretation rule to the control resource set index, with which the legacy UE 1806 may identify and obtain a second control resource set.

At block 1822, the scheduling entity 1802 configures and transmits a first control resource set according to a first translation of one or more SSB fields (e.g., a control resource set index and/or one or more other SSB fields associated with the index value); and at block 1823, the scheduling entity 1802 configures and transmits a second control resource set according to a second translation of the one or more SSB fields, different from the first translation.

At block 1843, the reduced-capability UE 1804 may receive the first control resource set and obtain system information, e.g., carried in a SIB. For example, the reduced-capability UE 1804 may monitor first wireless resources based on a first translation of one or more SSB fields associated with a control resource set index value in the SSB, described above. When the scheduling entity 1802 transmits a control resource set over those resources, the reduced-capability UE 1804 may receive and read the information contained within.

At block 1863, the legacy UE 1806 may receive the second control resource set and obtain system information, e.g., carried in a SIB. For example, the legacy UE 1806 may monitor second wireless resources (different from the first resources) based on a second translation (different from the first translation) of one or more SSB fields associated with a control resource set index value in the SSB, described above. When the scheduling entity 1802 transmits a control resource set over those resources, the legacy UE 1806 may receive and read the information contained within.

In various examples, the first wireless resources and/or second wireless resources may be multiplexed in any suitable fashion with the SSB, e.g., being offset from the SSB in frequency, time, or in both frequency and time.

At block 1824, the scheduling entity 1802 may transmit control information for characterizing or modifying a rule for translation of the one or more SSB fields associated with a control resource set index value in the SSB, to be used by a given UE category. For example, a translation information element or a translation modification information element may identify a given UE set or category (e.g., reduced-capability UEs) and may provide instructions or parameters that characterize a translation or interpretation rule for a UE receiving the corresponding control resource set. In some examples, the translation modification information element may be carried in the SSB transmitted in block 1821 above, such that UEs in the corresponding category can apply the new rule during their respective initial acquisition procedures.

At block 1825, the scheduling entity 1802 may configure and transmit a third control resource set according to the third translation of one or more SSB fields (e.g., a control resource set index and/or one or more other SSB fields associated with the index value).

Several aspects of a wireless communication network have been presented with reference to an exemplary implementation. As those skilled in the art will readily appreciate, various aspects described throughout this disclosure may be extended to other telecommunication systems, network architectures and communication standards.

By way of example, various aspects may be implemented within other systems defined by 3GPP, such as Long-Term Evolution (LTE), the Evolved Packet System (EPS), the Universal Mobile Telecommunication System (UMTS), and/or the Global System for Mobile (GSM). Various aspects may also be extended to systems defined by the 3rd Generation Partnership Project 2 (3GPP2), such as CDMA2000 and/or Evolution-Data Optimized (EV-DO). Other examples may be implemented within systems employing IEEE 802.11 (Wi-Fi), IEEE 802.17 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

Within the present disclosure, the word "exemplary" is used to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first object may be coupled to a second object even though the first object is never directly physically in contact with the second object. The terms "circuit" and "circuitry" are used broadly, and intended to include both hardware implementations of electrical devices and conductors that, when connected and configured, enable the performance of the functions described in the present disclosure, without limitation as to the type of electronic circuits, as well as software implementations of information and instructions that, when executed by a processor, enable the performance of the functions described in the present disclosure.

One or more of the components, steps, features and/or functions illustrated in FIGs. 1-18 may be rearranged and/or combined into a single component, step, feature or function or embodied in several components, steps, or functions. Additional elements, components, steps, and/or functions may also be added without departing from novel features disclosed herein. The apparatus, devices, and/or components illustrated in FIGs. 1-18 may be configured to perform one or more of the methods, features, or steps described herein. The novel algorithms described herein may also be efficiently implemented in software and/or embedded in hardware.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more."

Unless specifically stated otherwise, the term "some" refers to one or more. A phrase referring to "at least one of" a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

**Claims**

1. A method of wireless communication performed by a scheduling device being a user equipment or a base station, comprising:

   transmitting (1221) a synchronization signal block, SSB, comprising information for identification of a first control resource set for a first set of one or more user equipment (1204), UEs, and information for identification of a second control resource set for a second set of one or more UEs (1206);
   transmitting (1225) the first control resource set over a first bandwidth for the first set of one or more UEs (1204); and
   transmitting (1226) the second control resource set over a second bandwidth, wider than the first bandwidth, for the second set of one or more UEs (1206).

2. The method of claim 1, further comprising:

   configuring (1222) the first bandwidth according to a presumed bandwidth capability of the first set of one or more UEs (1204); and
   configuring (1223) the second bandwidth according to a presumed bandwidth capability of the second set of one or more UEs (1206).

3. The method of claim 1, further comprising:
   configuring (1224) the first control resource set to provide supplementary redundancy for a system information block.

4. The method of claim 1, further comprising:
   Configuring the first control resource set for sharing with the second set of one or more UEs (1206).

5. A method of wireless communication, comprising:

   transmitting (1421) a synchronization signal block, SSB, for identification of a first system information block, SIB, for a first set of one or more user equipment (1404), UEs, within a shared control resource set, and information for identification of a second SIB for a second set of one or more UEs (1406) within the shared control resource set;
   transmitting (1425) the shared control resource set including the first SIB having a first bandwidth, and including the second SIB having a second bandwidth, wider than the first bandwidth.

6. The method of claim 5,

   configuring (1422) the first bandwidth according to a presumed bandwidth capability of the first set of one or more UEs (1404); and
   configuring (1423) the second bandwidth according to a presumed bandwidth capability of the second set of one or more UEs (1406).

7. The method of claim 5, further comprising:
   configuring (1424) the control resource set to provide supplementary redundancy for the first SIB.

8. The method of claim 5, further comprising:
   configuring the first SIB for sharing with the second set of one or more UEs (1406).

9. A method of wireless communication, comprising:

transmitting (1621) a synchronization signal block, SSB, configured to be shared by at least a first category of user equipment (1604), UEs, and a second category of UEs (1606), wherein a category of UEs refers to a capability or operational parameter of a UE;

configuring (1622) a control resource set to have a bandwidth corresponding to a presumed bandwidth capability of the first set of one or more UEs (1604), the presumed bandwidth capability of the first category of UEs (1604) being narrower than a presumed bandwidth capability of the second category of UEs (1606); and

transmitting (1623) the control resource set over the bandwidth, to be shared by at least the first category of UEs (1604) and the second category of UEs (1606).

10. A method of wireless communication, comprising:

transmitting (1821) a synchronization signal block, SSB, configured to be shared by at least two categories of user equipment (1804, 1806), UEs, wherein a category of UEs refers to a capability or operational parameter of a UE, the SSB comprising an index value for indicating a configuration of a control resource set;

transmitting (1822) a first control resource set configured according to a first translation of one or more SSB fields associated with the index value; and

transmitting (1823) a second control resource set configured according to a second translation of one or more SSB fields associated with the index value, the second translation being different from the first translation.

11. The method of claim 10, wherein the first translation associates a first set of resources for the first control resource set, and wherein the second translation associates a second set of resources, offset in at least one of time or frequency, for the second control resource set.

12. The method of claim 10, further comprising:

transmitting at least one additional control resource set offset in frequency from the first control resource set, for a subset of the second set of one or more UEs; and

transmitting the at least one additional control resource set for the subset of the second set of one or more UEs.

13. An apparatus for wireless communication, comprising means for performing the method of any of the claims 1 to 12.

14. A computer program comprising instructions that, when executed on a processor of an apparatus for wireless communication, cause processor to perform the method of any of the claims 1 to 12.

15. A computer readable medium storing instructions that, when executed on a processor of an apparatus for wireless communication, cause processor to perform the method of any of the claims 1 to 12.

**Patentansprüche**

1. Verfahren zur drahtlosen Kommunikation, das von einer Planungsvorrichtung durchgeführt wird, die ein Benutzergerät oder eine Basisstation ist, umfassend:

Übertragen (1221) eines Synchronisationssignalblocks, SSB, umfassend Information zur Identifikation eines ersten Steuerressourcensatzes für einen ersten Satz von einem oder mehreren Benutzergeräten (1204), UEs, und Information zur Identifikation eines zweiten Steuerressourcensatzes für einen zweiten Satz von einem oder mehreren UEs (1206);

Übertragen (1225) des ersten Steuerressourcensatzes über eine erste Bandbreite für den ersten Satz von einem oder mehreren UEs (1204); und

Übertragen (1226) des zweiten Steuerressourcensatzes über eine zweite Bandbreite, die breiter als die erste Bandbreite ist, für den zweiten Satz von einem oder mehreren UEs (1206).

2. Verfahren nach Anspruch 1, ferner umfassend:

Konfigurieren (1222) der ersten Bandbreite gemäß einer angenommenen Bandbreitenfähigkeit des ersten Satzes von einem oder mehreren UEs (1204); und

Konfigurieren (1223) der zweiten Bandbreite gemäß einer angenommenen Bandbreitenfähigkeit des zweiten Satzes von einem oder mehreren UEs (1206).

**3.** Verfahren nach Anspruch 1, ferner umfassend:
Konfigurieren (1224) des ersten Steuerressourcensatzes, um zusätzliche Redundanz für einen Systeminformationsblock bereitzustellen.

**4.** Verfahren nach Anspruch 1, ferner umfassend:
Konfigurieren des ersten Steuerressourcensatzes zur gemeinsamen Nutzung mit dem zweiten Satz von einem oder mehreren UEs (1206).

**5.** Verfahren zur drahtlosen Kommunikation, umfassend:

Übertragen (1421) eines Synchronisationssignalblocks, SSB, zur Identifikation eines ersten Systeminformationsblocks, SIB, für einen ersten Satz von einem oder mehreren Benutzergeräten (1404), UEs, innerhalb eines gemeinsam genutzten Steuerressourcensatzes, und Information zur Identifikation eines zweiten SIB für einen zweiten Satz von einem oder mehreren UEs (1406) innerhalb des gemeinsam genutzten Steuerressourcensatzes;
Übertragen (1425) des gemeinsam genutzten Steuerressourcensatzes einschließlich des ersten SIB mit einer ersten Bandbreite und einschließlich des zweiten SIB mit einer zweiten Bandbreite, die breiter als die erste Bandbreite ist.

**6.** Verfahren nach Anspruch 5, ferner umfassend:

Konfigurieren (1422) der ersten Bandbreite gemäß einer angenommenen Bandbreitenfähigkeit des ersten Satzes von einem oder mehreren UEs (1404); und
Konfigurieren (1423) der zweiten Bandbreite gemäß einer angenommenen Bandbreitenfähigkeit des zweiten Satzes von einem oder mehreren UEs (1406).

**7.** Verfahren nach Anspruch 5, ferner umfassend:
Konfigurieren (1424) des Steuerressourcensatzes, um zusätzliche Redundanz für den ersten SIB bereitzustellen.

**8.** Verfahren nach Anspruch 5, ferner umfassend:
Konfigurieren des ersten SIB zur gemeinsamen Nutzung mit dem zweiten Satz von einem oder mehreren UEs (1406).

**9.** Verfahren zur drahtlosen Kommunikation, umfassend:

Übertragen (1621) eines Synchronisationssignalblocks, SSB, der konfiguriert ist, um von mindestens einer ersten Kategorie von Benutzergeräten (1604), UEs, und einer zweiten Kategorie von UEs (1606) gemeinsam genutzt zu werden, wobei sich eine Kategorie von UEs auf einen Fähigkeits- oder Betriebsparameter eines UE bezieht;
Konfigurieren (1622) eines Steuerressourcensatzes, um eine Bandbreite aufzuweisen, die einer angenommenen Bandbreitenfähigkeit des ersten Satzes von einem oder mehreren UEs (1604) entspricht, wobei die angenommene Bandbreitenfähigkeit der ersten Kategorie von UEs (1604) enger ist als eine angenommene Bandbreitenfähigkeit der zweiten Kategorie von UEs (1606); und
Übertragen (1623) des Steuerressourcensatzes über die Bandbreite, um von mindestens der ersten Kategorie von UEs (1604) und der zweiten Kategorie von UEs (1606) gemeinsam genutzt zu werden.

**10.** Verfahren zur drahtlosen Kommunikation, umfassend:

Übertragen (1821) eines Synchronisationssignalblocks, SSB, der konfiguriert ist, um von mindestens zwei Kategorien von Benutzergeräten (1804, 1806), UEs, gemeinsam genutzt zu werden, wobei sich eine Kategorie von UEs auf einen Fähigkeits- oder Betriebsparameter eines UE bezieht, wobei der SSB einen Indexwert zum Anzeigen einer Konfiguration eines Steuerressourcensatzes umfasst;
Übertragen (1822) eines ersten Steuerressourcensatzes, der gemäß einer ersten Übersetzung von einem oder mehreren SSB-Feldern konfiguriert ist, die mit dem Indexwert assoziiert sind; und
Übertragen (1823) eines zweiten Steuerressourcensatzes, der gemäß einer zweiten Übersetzung von einem oder mehreren SSB-Feldern konfiguriert ist, die mit dem Indexwert assoziiert sind, wobei sich die zweite Übersetzung von der ersten Übersetzung unterscheidet.

**11.** Verfahren nach Anspruch 10, wobei die erste Übersetzung einen ersten Satz von Ressourcen für den ersten Steuerressourcensatz assoziiert und wobei die zweite Übersetzung einen zweiten Satz von Ressourcen, der in mindestens einem von Zeit oder Frequenz versetzt ist, für den zweiten Steuerressourcensatz assoziiert.

**12.** Verfahren nach Anspruch 10, ferner umfassend:

Übertragen mindestens eines zusätzlichen Steuerressourcensatzes, der in der Frequenz von dem ersten Steuerressourcensatz versetzt ist, für eine Teilmenge des zweiten Satzes von einem oder mehreren UEs; und Übertragen des mindestens einen zusätzlichen Steuerressourcensatzes für die Teilmenge des zweiten Satzes von einem oder mehreren UEs.

**13.** Vorrichtung zur drahtlosen Kommunikation, umfassend Mittel zum Durchführen des Verfahrens nach einem der Ansprüche 1 bis 12.

**14.** Computerprogramm, umfassend Anweisungen, die, wenn sie auf einem Prozessor einer Vorrichtung zur drahtlosen Kommunikation ausgeführt werden, den Prozessor veranlassen, das Verfahren nach einem der Ansprüche 1 bis 12 durchzuführen.

**15.** Computerlesbares Medium, das Anweisungen speichert, die, wenn sie auf einem Prozessor einer Vorrichtung zur drahtlosen Kommunikation ausgeführt werden, den Prozessor veranlassen, das Verfahren nach einem der Ansprüche 1 bis 12 durchzuführen.

**Revendications**

**1.** Un procédé de communication sans fil réalisé par un dispositif de planification qui est un équipement utilisateur ou une station de base, comprenant :

la transmission (1221) d'un bloc de signal de synchronisation, SSB, comprenant des informations pour l'identification d'un premier ensemble de ressources de contrôle pour un premier ensemble d'un ou plusieurs équipements utilisateur, UE, (1204) et des informations pour l'identification d'un second ensemble de ressources de contrôle pour un second ensemble d'un ou plusieurs UE (1206) ;
la transmission (1225) du premier ensemble de ressources de contrôle sur une première bande passante pour le premier ensemble d'un ou plusieurs UE (1204) ; et
la transmission (1226) du second ensemble de ressources de contrôle sur une seconde bande passante, plus large que la première bande passante, pour le second ensemble d'un ou plusieurs UE (1206).

**2.** Le procédé selon la revendication 1, comprenant en outre :

la configuration (1222) de la première bande passante selon une capacité de bande passante présumée du premier ensemble d'un ou plusieurs UE (1204) ; et
la configuration (1223) de la seconde bande passante selon une capacité de bande passante présumée du second ensemble d'un ou plusieurs UE (1206).

**3.** Le procédé selon la revendication 1, comprenant en outre :
la configuration (1224) du premier ensemble de ressources de contrôle pour produire une redondance supplémentaire pour un bloc d'informations système.

**4.** Le procédé selon la revendication 1, comprenant en outre :
la configuration du premier ensemble de ressources de contrôle pour le partage avec le second ensemble d'un ou plusieurs UE (1206).

**5.** Un procédé de communication sans fil, comprenant :

la transmission (1421) d'un bloc de signal de synchronisation, SSB, pour l'identification d'un premier bloc d'informations système, SIB, pour un premier ensemble d'un ou plusieurs équipements utilisateur, UE, (1404) à l'intérieur d'un ensemble de ressources de contrôle partagées, et des informations pour l'identification d'un second SIB pour un second ensemble d'un ou plusieurs UE (1406) à l'intérieur de l'ensemble de ressources de contrôle partagées ;

la transmission (1425) de l'ensemble de ressources de contrôle partagées incluant le premier SIB ayant une première bande passante, et incluant le second SIB ayant une seconde bande passante, plus large que la première bande passante.

6. Le procédé selon la revendication 5,

la configuration (1422) de la première bande passante selon une capacité de bande passante présumée du premier ensemble d'un ou plusieurs UE (1404) ; et
la configuration (1423) de la seconde bande passante selon une capacité de bande passante présumée du second ensemble d'un ou plusieurs UE (1406).

7. Le procédé selon la revendication 5, comprenant en outre :
la configuration (1424) de l'ensemble de ressources de contrôle pour produire une redondance supplémentaire pour le premier SIB.

8. Le procédé selon la revendication 5, comprenant en outre :
la configuration du premier SIB pour le partage avec le second ensemble d'un ou plusieurs UE (1406).

9. Un procédé de communication sans fil, comprenant :

la transmission (1621) d'un bloc de signal de synchronisation, SSB, configuré pour être partagé par au moins une première catégorie d'équipement utilisateur, UE, (1604) et une seconde catégorie d'UE (1606), dans lequel une catégorie d'UE fait référence à une capacité ou un paramètre de fonctionnement d'un UE ;
la configuration (1622) d'un ensemble de ressources de contrôle pour avoir une bande passante correspondant à une capacité de bande passante présumée du premier ensemble d'un ou plusieurs UE (1604), la capacité de bande passante présumée de la première catégorie d'UE (1604) étant plus étroite qu'une capacité de bande passante présumée de la seconde catégorie d'UE (1606) ; et
la transmission (1623) de la ressource de contrôle définie sur la bande passante, à partager par au moins la première catégorie d'UE (1604) et la seconde catégorie d'UE (1606).

10. Un procédé de communication sans fil, comprenant :

la transmission (1821) d'un bloc de signal de synchronisation, SSB, configuré pour être partagé par au moins deux catégories d'équipements utilisateur, UE, (1804, 1806), dans lequel une catégorie d'UE fait référence à une capacité ou un paramètre de fonctionnement d'un UE, le SSB comprenant une valeur d'indice pour indiquer une configuration d'un ensemble de ressources de contrôle ;
la transmission (1822) d'un premier ensemble de ressources de contrôle configuré selon une première traduction d'un ou plusieurs champs SSB associés à la valeur d'indice ; et
la transmission (1823) d'un second ensemble de ressources de contrôle configuré selon une seconde traduction d'un ou plusieurs champs SSB associés à la valeur d'indice, la seconde traduction étant différente de la première traduction.

11. Le procédé selon la revendication 10, dans lequel la première traduction associe un premier ensemble de ressources pour le premier ensemble de ressources de contrôle, et dans lequel la seconde traduction associe un second ensemble de ressources, décalé en au moins un parmi le temps ou la fréquence, pour le second ensemble de ressources de contrôle.

12. Le procédé selon la revendication 10, comprenant en outre :

la transmission d'au moins un ensemble de ressources de contrôle supplémentaire décalé en fréquence par rapport au premier ensemble de ressources de contrôle, pour un sous-ensemble du second ensemble d'un ou plusieurs UE ; et
la transmission de l'au moins un ensemble de ressources de contrôle supplémentaire pour le sous-ensemble du second ensemble d'un ou plusieurs UE.

13. Un appareil pour la communication sans fil, comprenant des moyens pour réaliser le procédé selon l'une des revendications 1 à 12.

14. Un programme de calculateur comprenant des instructions qui, lorsqu'elles sont exécutées sur un processeur d'un appareil pour la communication sans fil, amènent le processeur à réaliser le procédé selon l'une des revendications 1 à 12.

15. Un support lisible par calculateur stockant des instructions qui, lorsqu'elles sont exécutées sur un processeur d'un appareil pour la communication sans fil, amènent le processeur à réaliser le procédé selon l'une des revendications 1 à 12.

**FIG. 1**

**FIG. 2**

EP 4 136 887 B1

302

subframe : subframe

302

310

**OFDM Resource Grid**
304

**Example Slot Structure**

312    314

310    Control    Data

Slot

Resource
Block (RB)
308

Resource
Element (RE)
306

subcarrier

OFDM
symbol

Frequency

Time

**FIG. 3**

FIG. 4

**FIG. 5**

**600**

SCHEDULED ENTITY

**614**    Processing System

**604**   Processor

**640**   Initial Acquisition Circuit

**642**   Wireless Communication Circuit

**606**   Computer-Readable Medium

**652**   Initial Acquisition Instructions

**654**   Wireless Communication Instructions

**602**

**605**   Memory

**612**   User Interface

**608**   Bus Interface

**610**   Transceiver

# FIG. 6

700

702 — Cell Search – search for sync signal block (SSB)

704 — Locate and receive SSB and obtain master information block (MIB)

706 — Receive control resource set as indicated in MIB and obtain SIB1

# FIG. 7

# FIG. 8

Separate SSB/Control Resource Sets

Low-End Reduced-
Capability UE
Mandatory Maximum
Bandwidth

906

902

SSB'

CS0'

SIB1' | SIB1' | ...

910

High-End Reduced-
Capability UE May
Receive This

High-End Reduced-
Capability UE
Mandatory Maximum
Bandwidth

908

904

SSB

CS0

# FIG. 9

Supplementary SIB Redundancy;
Separate SSB/Control Resource Sets Example

Scheduling Entity
**1002**

Reduced-Capability UE
(First Category)
**1004**

Legacy UE
(Second Category)
**1006**

**1021**
Transmit a first SSB for a first set of UEs, the first SSB including information indicating that the first SSB is designated for the first set of UEs

**1022**
Transmit a second SSB for a second set of UEs, the second SSB

**1023**
Configure the first bandwidth according to a presumed bandwidth capability of the first set of UEs

**1024**
Configure the second bandwidth according to a presumed bandwidth capability of the second set of UEs

**1025**
Configure the first control resource set to provide supplementary redundancy for a system information block

**1026**
Transmit a first control resource set over a first bandwidth for the first set of UEs

**1027**
Transmit a second control resource set over a second bandwidth, wider than the first bandwidth, for the second set of UEs.

**1041**
Cell Search – search for sync signal block (SSB)

**1042**
Receive first SSB and obtain information for identifying and obtaining control resource set

**1043**
Receive second SSB and determine that the second SSB is not designated for this UE category

**1044**
Receive first control resource set and obtain system information

**1061**
Cell Search – search for sync signal block (SSB)

**1062**
Receive first SSB and determine that the first SSB is designated for a different UE category

**1063**
Receive second SSB and obtain information for identifying and obtaining control resource set

**1064**
Receive first control resource set and obtain system information

**1065**
Receive second control resource set and obtain system information

# FIG. 10

Separate SSB/Control Resource Sets

Reduced-Capability
UE Mandatory
Maximum Bandwidth

1126

CS0'

1128

1122

SSB

CS0

Legacy UE Mandatory
Maximum Bandwidth

# FIG. 11

Shared SSB,
Separate Control Resource Sets

Scheduling Entity
1202

Reduced-Capability UE
(First Category)
1204

Legacy UE
(Second Category)
1206

1221
Transmit SSB comprising information for identification of a first control resource set for a first set of UEs and information for identification of a second control resource set for a second set of UEs

1222
Configure first bandwidth according to a presumed bandwidth corresponding to the first set of UEs

1223
Configure second bandwidth according to a presumed bandwidth corresponding to the second set of UEs

1224
Configure first control resource set to provide supplementary redundancy for a first system information block

1225
Transmit first control resource set over a first bandwidth for the first set of UEs

1226
Transmit a second control resource set over a second bandwidth, wider than the first bandwidth, for the second set of UEs.

1241
Cell Search – search for sync signal block (SSB)

1242
Receive SSB and obtain information for identifying and obtaining a first control resource set

1243
Receive first control resource set and obtain system information

1261
Cell Search – search for sync signal block (SSB)

1262
Receive SSB and obtain information for identifying and obtaining a second control resource set

1263
Receive first control resource set and obtain system information

1264
Receive second control resource set and obtain system information

# FIG. 12

Shared SSB,
Separate Control Resource Sets

# FIG. 13

Shared SSB,
Shared Control Resource Sets

Scheduling Entity
__1402__

Reduced-Capability UE
(First Category)
__1404__

Legacy UE
(Second Category)
__1406__

1421
Transmit an SSB comprising information for identification of a first system information block for a first set of UEs within a shared control resource set, and information for identification of a second system information block for a second set of UEs within the shared control resource set

1422
Configure a bandwidth of the first system information block according to a presumed bandwidth corresponding to the first set of UEs

1423
Configure a bandwidth of the second system information block according to a presumed bandwidth corresponding to the second set of UEs

1424
Configure the control resource set to provide supplementary redundancy for the first system information block

1425
Transmit a control resource set including a first system information block having a first bandwidth, and a second system information block having a second bandwidth, wider than the first bandwidth.

1441
Cell Search – search for sync signal block (SSB)

1442
Receive SSB and obtain information for identifying and obtaining a first SIB in a shared control resource set

1443
Receive control resource set and obtain first system information

1461
Cell Search – search for sync signal block (SSB)

1462
Receive SSB and obtain information for identifying and obtaining a second SIB in a shared control resource set

1463
Receive control resource set and obtain first system information

1464
Receive control resource set and obtain second system information

# FIG. 14

Shared SSB,
Shared Control Resource Sets

Reduced-Capability
UE Mandatory
Maximum Bandwidth

1502

SSB`

1506

CS0'

Legacy UE Mandatory
Maximum Bandwidth

# FIG. 15

Scheduling Entity
**1602**

Reduced-Capability UE
(First Category)
**1604**

Legacy UE
(Second Category)
**1606**

1621
> Transmit an SSB
> configured to be
> shared by at least two
> categories of UEs

1622
> Configure a control resource set to have a
> bandwidth corresponding to a presumed
> bandwidth capability of the first category
> of UEs, the presumed bandwidth
> capability of the first set of UEs being
> narrower than a presumed bandwidth
> capability of the second category of UEs.

1623
> Transmit the control resource set
> over the bandwidth, to be shared
> by for the category set of UEs
> and the second category of UEs

1641
> Cell Search –
> search for sync
> signal block (SSB)

1642
> Receive SSB and obtain
> information for
> identifying and obtaining
> a control resource set

1643
> Receive control resource
> set and obtain first system
> information

1661
> Cell Search –
> search for sync
> signal block (SSB)

1662
> Receive SSB and obtain
> information for
> identifying and obtaining
> a control resource set

1663
> Receive control resource
> set and obtain first
> system information

# FIG. 16

FIG. 17

**Scheduling Entity**
**1802**

**Reduced-Capability UE**
**(First Category)**
**1804**

**Legacy UE**
**(Second Category)**
**1806**

1821
Transmit an SSB configured to be shared by at least two categories of UEs, the SSB including an index value configured to indicate a configuration of a control resource set

1822
Transmit a first control resource set configured according to a first translation of one or more SSB fields associated with the index value

1823
Transmit a second control resource set configured according to a second translation of one or more SSB fields associated with the index value, the second translation being different from the first translation

1824
Transmit a translation modification information element

1825
Transmit a third control resource set configured according to a third translation of one or more SSB fields associated with the index value, the third translation being based on the translation modification information element

1841
Cell Search – search for sync signal block (SSB)

1842
Receive SSB, and obtain and translate index value for identifying and obtaining a first control resource set

1843
Receive first control resource set and obtain first system information

1861
Cell Search – search for sync signal block (SSB)

1862
Receive SSB, and obtain and translate index value for identifying and obtaining a second control resource set

1863
Receive second control resource set and obtain second system information

# FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018203672 A1

**Non-patent literature cited in the description**

- *3GPP TSG RAN Meeting #85 draft RP-192160*, 16 September 2019